(19) Europäisches Patentamt
European Patent Office
Office européen des brevets

(11) **EP 2 976 612 B1**

## (12) FASCICULE DE BREVET EUROPEEN

(45) Date de publication et mention
de la délivrance du brevet:
**08.05.2019 Bulletin 2019/19**

(21) Numéro de dépôt: **14713414.2**

(22) Date de dépôt: **19.03.2014**

(51) Int Cl.:
**G01K 17/20** *(2006.01)*    **G06Q 10/04** *(2012.01)*

(86) Numéro de dépôt international:
**PCT/EP2014/055547**

(87) Numéro de publication internationale:
**WO 2014/147148 (25.09.2014 Gazette 2014/39)**

(54) **PROCÉDÉ DE RÉALISATION D'UN DIAGNOSTIC THERMIQUE D'UN BÂTIMENT OU D'UNE PARTIE D'UN BÂTIMENT**

VERFAHREN ZUR HERSTELLUNG EINER WÄRMEDIAGNOSE EINES GEBÄUDES ODER EINES GEBÄUDETEILS

METHOD FOR PRODUCING A THERMAL DIAGNOSIS OF A BUILDING OR OF A PART OF A BUILDING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2013 FR 1352451**
**08.04.2013 FR 1353134**

(43) Date de publication de la demande:
**27.01.2016 Bulletin 2016/04**

(73) Titulaire: **Adagos**
**31520 Ramonville-Saint-Agne (FR)**

(72) Inventeur: **MASMOUDI, Mohamed**
**F-31400 Toulouse (FR)**

(74) Mandataire: **Ipside**
**6, Impasse Michel Labrousse**
**31100 Toulouse (FR)**

(56) Documents cités:
**FR-A1- 2 959 040      US-A1- 2005 171 645**
**US-A1- 2012 330 626**

**Description**

La présente invention concerne un procédé de réalisation d'un diagnostic thermique d'un bâtiment ou d'une partie d'un bâtiment à partir de données liées à l'utilisation du bâtiment, telles que la consommation d'énergie, les conditions météorologiques ou la présence humaine.

Le diagnostic thermique des performances du bâtiment inclut par exemple l'estimation du coefficient de transmission thermique, l'estimation des pertes par infiltration, l'estimation des gains solaires, à travers une surface extérieure du bâtiment ou d'une partie du bâtiment. Une surface extérieure est une surface séparant l'intérieur du bâtiment et l'extérieur soumis aux conditions météorologiques.

Ce procédé ne nécessite notamment aucune information sur les caractéristiques thermiques et dimensionnelles du bâtiment ou d'une partie du bâtiment.

Dans le domaine de la construction et de la rénovation de bâtiments, les performances thermiques font l'objet d'un intérêt croissant car elles influent directement et de manière de plus en plus sensible sur les dépenses liées au logement. Des matériaux nouveaux et des procédés nouveaux de construction et de rénovation existent mais les outils permettant la vérification des performances annoncées sont peu nombreux.

Des protocoles de mesure et de vérification définissent certains éléments à mesurer avant et après des travaux et des procédures à appliquer pour pouvoir vérifier de manière transparente l'atteinte, ou non, des performances prévues. Des protocoles ont été développés et ont commencé à être utilisés en France par les acteurs du monde du bâtiment. Les protocoles existants sont principalement basés sur la consommation d'énergie. Ces méthodes ne permettent pas de déterminer les performances intrinsèques du bâtiment et de les rattacher au corpus normatif actuel (EN 832 ou EN 13790 par exemple).

Sur le plan technique, l'enjeu est de définir à la fois ce qui doit être mesuré avant et après travaux et comment on peut en évaluer l'impact sur la réponse thermique intrinsèque du bâtiment en neutralisant les paramètres extérieurs : climat, évolutions du mode d'utilisation du bâtiment.

Sur le plan économique, l'enjeu est d'arriver à des plans dont les coûts d'application représentent un faible pourcentage des économies obtenues sur la consommation d'énergie. Les protocoles devront inspirer confiance à la fois à ceux qui commandent les travaux, à ceux qui paient les dépenses énergétiques et à ceux qui réalisent les travaux. Ils devront donc faire consensus. Pour cela, des bases scientifiques et techniques robustes et cohérentes avec les réglementations sont nécessaires.

Ainsi il a été proposé, d'une part, d'établir des protocoles de mesure et de vérification permettant de prouver les gains de performance effectivement obtenus suite à une mise en oeuvre de solutions globales ou ponctuelles d'efficacité énergétique et, d'autre part, de généraliser leur utilisation via dans un premier temps une obligation dans les travaux bénéficiant d'aides de l'Etat ou dans les travaux sur les bâtiments publics.

Ces travaux nécessitent une étude de l'introduction d'un processus de mesure unique de la performance énergétique réelle des bâtiments, et des outils de mesure associés.

L'attente, vis-à-vis de la vérification des performances, dans le secteur du bâtiment est double : du côté des maîtres d'ouvrage et occupants des bâtiments, il s'agit de garantir l'efficacité de travaux et d'investissements souvent coûteux engagés pour atteindre les objectifs d'amélioration de la performance énergétique annoncés avant les travaux. Pour les promoteurs et constructeurs, il s'agit de pouvoir garantir les performances annoncées de manière à retenir l'attention de leurs clients.

Le document FR-2 967 793 concerne un système de gestion de l'énergie consommée dans au moins un bâtiment, comportant des capteurs de mesure de la consommation énergétique aptes chacun à mesurer une quantité d'énergie consommée par au moins un appareil installé dans le bâtiment ; un concentrateur de données apte à récupérer des données de mesure relevées par les dispositifs de mesure et à traiter ces données ; un serveur de données apte à agréger et gérer les données mesurées et les données traitées transmises par le concentrateur et à enregistrer ces données dans des bases de données ; et des effecteurs associées chacun à au moins un appareil du bâtiment et aptes à agir sur la consommation en énergie de cet appareil, les capteurs de consommation énergétique et les effecteurs étant reliés en réseau pour communiquer les uns avec les autres.

Le document EP-2 312 505 décrit quant à lui un procédé implémenté par ordinateur pour la surveillance et l'analyse de la consommation d'énergie d'au moins un bâtiment industriel. Ce procédé comprend la détermination de la valeur théorique optimale de consommation d'énergie (TEO) sur la base d'un modèle du bâtiment, l'identification et le regroupement des paramètres qui contribuent à l'augmentation de la consommation d'énergie du bâtiment dans le cas d'une utilisation réelle du bâtiment (CCE), en raison des caractéristiques intrinsèques de l'immeuble (BEO), en raison de conditions de fonctionnement optimisés du bâtiment (OEO), et ce en fournissant la contribution des différents paramètres. Ceci est fait en partie d'une manière automatique, et chaque fois que nécessaire, par représentation graphique de la consommation d'énergie théorique du bâtiment, de la consommation d'énergie optimale et la consommation d'énergie en cours en ajoutant les taux de consommation d'énergie individuelles des paramètres respectifs dans les groupes, formant ainsi une cascade d'énergie qui permet de contrôler au moins une partie des paramètres individuels.

L'article de Lee, Y.M. et al. "Modeling and simulation of building energy performance for portfolios of public buildings", Proceedings of the 2011 Winter Simulation Conference, IEEE, étayé par les articles plus détaillés de An, L. et al. "Estimation of thermal parameters of buildings through inverse modeling and clustering for a portfolio of buildings", Working paper, IBM TJ Watson Research Center, 2012 et de Liu, F. et al. "Statistical modeling for anomaly detection, forecasting and root cause analysis of energy consumption for a portfolio of buildings", Proceedings of IBPSA 2011, vise à déterminer les performances d'un portefeuille de bâtiments administratifs similaires. La construction de modèles théoriques des bâtiments est à la base de ces travaux. Ces modèles théoriques supposent la connaissance du plan du bâtiment, des matériaux supposés ou effectivement utilisés pour sa construction. A partir de la consommation d'énergie, l'identification des propriétés thermiques du bâtiment se fait en respectant des conventions théoriques fournies par l'ASHRAE (American Society of Heating, Refrigerating and Air-conditioning Engineers) dans son livre "Handbook: Fundamentals" de 2009. Ces conventions imposent des valeurs minimales et maximales pour les caractéristiques thermiques du bâtiment et une contrainte de proportionnalité entre les pertes par infiltration et les pertes par transmission.

Il en est de même pour le document FR-2 959 040 qui se base sur la modélisation conventionnelle. Le procédé cherche à corriger l'écart entre un modèle théorique et la consommation réelle et cherche les raisons à cet écart.

La modélisation conventionnelle, telle qu'elle est pratiquée dans les documents EP-2 312 505, EP-2 226 738, FR-2 959 040 et les 3 articles précités, n'est pas d'une grande utilité en raison de l'écart constaté entre les performances thermiques réelles et les performances estimées par ces modèles. Il est difficile d'attribuer l'écart à telle ou telle propriété de matériau ou au modèle lui-même. Le modèle n'est qu'une approximation de la réalité thermique du bâtiment qui est d'une complexité extrême. La difficulté augmente avec l'étude de bâtiments anciens où l'on ne dispose pas en général de plans de réalisation pour établir un modèle. Les propriétés thermiques des murs anciens sont difficiles à estimer et elles peuvent dépendre des transferts hydriques. Une grande diversité de situations peut être rencontrée : les murs anciens maçonnés à la terre et enduits à la chaux, les murs anciens en briques enduits de plâtre ou de chaux ou encore les murs en pans de bois et torchis, enduits à la chaux. Dans ces documents, le modèle décrivant la demande énergétique du bâtiment, est basé sur la connaissance des caractéristiques dimensionnelles du bâtiment, de ses caractéristiques thermiques et des bornes conventionnelles sur ces caractéristiques qui sont prises en compte par le diagnostic thermique final.

Le document EP-2 081 097 révèle un procédé et un dispositif est prévu pour la communication de la consommation d'énergie dans un bâtiment ou une partie de celle-ci, lorsque personne n'est présent dans le bâtiment. Sur la base des résultats de la méthode, les économies d'énergie peuvent être prises. Le procédé comprend la détection simultanée sensiblement de la présence d'une personne et la consommation d'énergie et la comparaison, après une période de temps, de la présence et de la consommation d'énergie. Le dispositif comprend un capteur de présence pour déterminer la présence d'une personne dans un bâtiment et un capteur de consommation d'énergie pour la détermination de la consommation d'énergie. En outre, le dispositif comprend un dispositif de collecte de données pour la collecte des données de consommation et les données provenant des capteurs de présence respectifs. Le dispositif comprend aussi un dispositif de représentation pour la représentation des données recueillies. Il n'est pas prévu ici de réaliser un diagnostic thermique concernant le bâtiment.

Le document EP-2 400 440 montre un système et un procédé pour la modélisation prédictive de la consommation d'énergie d'un bâtiment. Le procédé fournit des valeurs prédites de charge d'énergie du bâtiment déterminées par un lissage à noyaux de valeurs d'historique de charge d'énergie d'un bâtiment en utilisant des facteurs d'échelle définis pour la mise à l'échelle de variables indépendantes associées à la consommation d'énergie du bâtiment. Les variables indépendantes peuvent être la température, l'humidité, la vitesse du vent ou sa direction, l'affectation des locaux, le jour, la date et le rayonnement solaire. La mise à l'échelle des valeurs de facteurs peut être définie par un apprentissage d'optimisation en utilisant les valeurs historiques de charge d'énergie du bâtiment et des variables indépendantes mesurées d'un bâtiment. Les valeurs de charge d'énergie prédites et mesurées d'énergie de charge du bâtiment sont comparées afin de déterminer si un seuil de différence prédéfini a été dépassé, auquel cas un signal d'alerte ou un message est généré et transmis électroniquement et/ou physiquement à un utilisateur.

L'essentiel du savoir-faire dans le domaine des mesures des performances thermiques intrinsèques repose sur la mesure d'échantillons de petite taille dans des conditions stationnaires obtenues en laboratoire, où l'on peut contrôler les conditions aux limites. La difficulté majeure de l'évaluation des performances d'un bâtiment est liée au caractère instationnaire des conditions météorologiques auxquelles il est soumis. En général, les conditions météorologiques changent plus rapidement que la réponse thermique du bâtiment.

Aux Etats Unis, de gros moyens ont été utilisés pour construire un simulateur de conditions météorologiques par le Oak Ridge National Laboratory. Cette structure appelée Large-Scale Climate Simulator peut mesurer les performances thermiques intrinsèques d'un bâtiment de taille moyenne.

La présente invention a quant à elle pour but de fournir une méthode pour établir un diagnostic thermique des performances d'un bâtiment ou d'une partie d'un bâtiment, telles que par exemple des coefficients de transmission thermique de l'enveloppe du bâtiment, son inertie thermique, des pertes par infiltration ou des gains solaires, à partir de données liées à l'utilisation du bâtiment, telles que la consommation d'énergie, les conditions météorologiques ou la présence humaine. Aucune information portant sur les caractéristiques du bâtiment, telles que le dimensionnement, le mode de construction, les matériaux utilisés, etc., n'est exigée.

Ce diagnostic thermique peut être utilisé par exemple :

- pour vérifier si la construction est conforme à la conception du bâtiment (engagement de la maitrise d'oeuvre) et dans certains cas litigieux si les composants utilisés ont réellement les performances annoncées, d'où l'importance de ne pas avoir recours aux informations sur les performances annoncées,
- pour fournir une méthode d'information de l'usager du bâtiment, afin d'optimiser l'utilisation de certaines ressources du bâtiment, de sensibiliser les occupants à des meilleures pratiques ou en cas de surcharge de couper les postes les plus gourmands en énergie,
- pour fournir un procédé permettant de prédire et d'optimiser la consommation énergétique sur le court et le long terme.

À cet effet, la présente invention propose un procédé de réalisation d'un diagnostic thermique d'un bâtiment ou d'une partie d'un bâtiment, occupé ou non, comportant des appareils de chauffage refroidissement permettant le chauffage refroidissement du bâtiment ou d'une partie de bâtiment, ainsi que des appareils d'usage situés à l'intérieur du bâtiment ou d'une partie de bâtiment, comme défini dans la revendication 1.

Dans le cas où plusieurs parties de bâtiment sont concernées par le procédé, le modèle a une sortie multiple avec autant de composantes que de parties de bâtiment.

Par appareil d'usage, il convient ici de considérer ici tout équipement consommant de l'énergie, situé à l'intérieur du bâtiment ou de la partie de bâtiment, et qui n'est pas destiné au chauffage refroidissement.

Par caractéristiques dimensionnelles du bâtiment on entend n'importe quelle mesure de longueur, de surface ou de volume liée au bâtiment. A titre d'exemple, ces mesures peuvent inclure la longueur des ponts thermiques, la surface du sol, des toits, des murs ou des fenêtres. Le volume peut faire référence au volume de la partie chauffée ou refroidie du bâtiment ou de la partie du bâtiment. Ces caractéristiques dimensionnelles peuvent inclure tous les détails qui apparaissent sur un plan de construction. Elles peuvent s'exprimer par un nombre entier donnant le nombre d'éléments ayant, la même longueur, la même surface ou le même volume.

Les caractéristiques thermiques du bâtiment ou de ses éléments constitutifs sont les valeurs communément dénommées valeurs U dans le domaine énergétique, de ces éléments ou de toute autre caractéristique dérivée à partir de ces valeurs U. La valeur U est également appelée « facteur U », « coefficient U » ou encore « U value » en terminologie anglaise. On peut citer à titre d'exemple, la valeur U des toits, des fenêtres et des murs du bâtiment. Remarquons que dans l'article de Lee, Y.M. et al. cité précédemment, les caractéristiques thermiques peuvent être déterminées à partir de l'âge du bâtiment.

Un tel procédé présente une philosophie à contre-courant des procédés existants. Alors que ceux-ci partent d'un modèle existant, qu'ils viennent modifier entre autres à partir des caractéristiques thermiques et dimensionnelles théoriques du bâtiment, le procédé suivant l'invention n'a recours ni au modèle existant, ni à la connaissance préalable des caractéristiques thermiques et dimensionnelles théoriques du bâtiment.

Un tel procédé permet avantageusement de définir un lien réel entre la consommation énergétique du bâtiment et les conditions météorologiques extérieures.

Préférentiellement, ledit modèle numérique relie les pertes énergétiques par chauffage refroidissement à travers une surface extérieure du bâtiment ou d'une partie du bâtiment à des conditions météorologiques et à des conditions d'utilisation antérieures.

Les pertes énergétiques tiennent compte des pertes par transmission, des pertes par infiltration d'air et des gains solaires.

Un tel procédé trouve une application particulière au diagnostic thermique de bâtiments anciens, où il s'avère difficile voire impossible de connaître les caractéristiques thermiques du bâtiment. Le procédé suivant l'invention s'affranchissant de la connaissance préalable desdites caractéristiques thermiques du bâtiment, le diagnostic thermique dudit bâtiment s'avère plus réaliste.

Dans une variante de mise en oeuvre du procédé, le modèle numérique est créé à partir d'au moins une partie des mesure et acquisition réalisées, à l'exclusion des informations sur les caractéristiques thermiques et dimensionnelles du bâtiment ou d'une partie de bâtiment.

Dans une variante de mise en oeuvre du procédé, outre l'acquisition des paramètres concernant la météorologie, le procédé acquiert des conditions d'utilisation du bâtiment ou d'une partie du bâtiment comme variables d'entrée du modèle numérique (telles que par exemple un indicateur de présence humaine, un indicateur sur la ventilation mécanique, un indicateur sur l'humidité,...)

Dans un exemple de mise en oeuvre du procédé, la mesure de la consommation énergétique des appareils de chauffage refroidissement et des appareils d'usage du bâtiment ou d'une partie de bâtiment est une mesure unique de consommation globale du bâtiment ou d'une partie de bâtiment.

En appliquant le modèle numérique défini ci-dessus à différents scenarii météorologiques et d'utilisation d'un bâtiment, on peut déduire des performances règlementaires (conventionnelles) du bâtiment, tels par exemple :

- un coefficient de déperdition par transmission HT de la paroi et des pertes d'énergie par transmission,
- des pertes par infiltration et par ventilation,
- des gains solaires,
- un rendement de(s) l'appareil(s) de chauffage refroidissement.

Ce modèle numérique, s'il est soumis à des conditions stationnaires de météorologie et d'utilisation du bâtiment, donne des performances stationnaires. Cela permet, en particulier, la détermination d'une température de calibrage qui correspond à une consommation d'énergie de chauffage refroidissement nulle pour des paramètres météorologiques et d'utilisation du bâtiment donnés. Cette température est une estimation de la température intérieure du bâtiment ou d'une partie du bâtiment et permet, en particulier, d'établir le diagnostic thermique d'une partie d'un bâtiment. La démarche s'applique au cas où plusieurs parties de bâtiment sont concernées par le procédé. La température de calibrage de chaque partie du bâtiment correspond à la température extérieure qui annule la composante de la consommation d'énergie qui lui correspond.

Le procédé proposé ici peut être utilisé dans le temps pour faire en continu une vérification des performances réglementaires (conventionnelles) d'un bâtiment. L'analyse des résultats permet quant à elle de vérifier si la construction est conforme à la conception du bâtiment. L'utilisation d'un modèle permet de s'affranchir des fluctuations des conditions météorologiques subies. En effet, on peut alimenter le modèle avec des conditions météorologiques de référence, représentatives des conditions climatiques locales du bâtiment.

Le procédé selon la présente invention peut être utilisé selon deux modalités : une modalité dite d'usage mise en oeuvre lorsque le bâtiment est occupé et une modalité de test s'appliquant à un bâtiment non occupé. Durant la période de test, l'utilisation des appareils de chauffage refroidissement et des appareils d'usage peut différer des conditions d'utilisation usuelles. Par exemple, une consommation d'usage peut être simulée pour les besoins du test. Ces informations sont collectées par exemple en continu avec une périodicité suffisamment petite pour tenir compte de la dynamique des phénomènes observés. Pour un diagnostic thermique ponctuel, le test peut durer de quelques jours à quelques semaines en été ou en hiver.

Ces deux modalités peuvent être utilisées conjointement. En particulier, la modalité de test peut compléter la modalité s'appliquant à un bâtiment en cours d'usage. Selon ces modalités, au moins une partie des mesures réalisées sont utilisées pour créer un modèle numérique susceptible d'évoluer à chaque fourniture d'un nouvel ensemble de mesures. Un modèle numérique est construit à partir de ces données et un diagnostic thermique est réalisé en dérivant les performances règlementaires (conventionnelles) du bâtiment ou d'une partie du bâtiment liées au coefficient de déperdition par transmission, les pertes par infiltration et ventilation, les gains solaires, le rendement des appareils de chauffage refroidissement. Lorsque le modèle est alimenté par des données météorologiques et d'utilisation stationnaires, il donne des performances stationnaires. En particulier, il permet la détermination d'une température de calibrage qui, pour des paramètres statiques donnés, correspond à la température moyenne à l'intérieur du bâtiment ou d'une partie du bâtiment. Cette température est intimement liée à la consommation d'énergie de chauffage refroidissement.

Dans un mode de mise en oeuvre, des mesures distinctes de la consommation énergétique des appareils d'usage et de la consommation énergétique des appareils de chauffage refroidissement sont réalisées.

Un tel mode de mise en oeuvre permet de déterminer les pertes énergétiques à travers la surface extérieure du bâtiment ou d'une partie du bâtiment en tenant compte de la contribution ou de l'impact des appareils d'usage. Ainsi un tel mode de mise en oeuvre permet d'une part de déterminer la contribution des appareils d'usage au chauffage du bâtiment ou d'une partie du bâtiment et d'autre part de déterminer la surconsommation énergétique d'appareils de refroidissement induite par les appareils d'usage.

Lorsqu'une mesure des consommations des appareils autres que les appareils de chauffage et/ou refroidissement est effectuée, il est proposé qu'une compensation, respectivement surconsommation, soit réalisée entre la consommation énergétique de chauffage, respectivement refroidissement, et la consommation énergétique des autres appareils utilisés dans le bâtiment ou la partie de bâtiment. On tient ainsi compte du fait que la consommation énergétique des appareils d'usage influe sur la consommation des appareils de chauffage et/ou de refroidissement. La chaleur dégagée par les divers appareils ménagers va permettre de diminuer la consommation de chauffage mais va provoquer une surconsommation des appareils de refroidissement.

Pour réaliser une compensation encore plus efficace, le procédé comporte de préférence en outre une étape de détermination du rendement des appareils de chauffage refroidissement à partir d'une mesure distincte de la consommation énergétique entre les appareils d'usage de rendement thermique égal à 1 et les appareils de chauffage refroidissement d'un rendement thermique différent de 1.

Dans un procédé de réalisation d'un diagnostic thermique d'un bâtiment selon l'invention, les mesures effectuées sont par exemple réalisées à des moments prédéterminés fournissant un ensemble de mesures. En variante, on peut par exemple prévoir que les mesures soient faites aléatoirement dans le temps.

On peut aussi prévoir éventuellement que les mesures effectuées sont mémorisées au moins pendant une période de temps prédéterminée. Une alternative peut consister à apprendre les mesures à la volée, sans les mémoriser, en utilisant par exemple un filtre de Kalman.

Dans une variante de réalisation préférée de ce procédé, les paramètres concernant la météorologie sont choisis dans l'ensemble comportant la température extérieure, la vitesse du vent, la direction du vent, l'ensoleillement. D'autres paramètres peuvent être considérés tels que la pluviométrie, la température du ciel, l'humidité relative et la pression atmosphérique. Ces divers paramètres météorologiques peuvent être obtenus par exemple à l'aide de capteurs extérieurs au bâtiment (ou à la partie de bâtiment) mais on peut aussi par exemple les obtenir par Internet.

Un procédé selon la présente invention prévoit également de préférence une mesure permettant de déterminer et/ou de quantifier une présence humaine dans le bâtiment ou dans la partie du bâtiment. Un indicateur de présence humaine peut être défini pour chaque partie de bâtiment concernée par le procédé.

Un procédé selon la présente innovation prévoit avantageusement la détection du fonctionnement de chauffages d'appoint. On entend par chauffage d'appoint un appareil dont il est difficile de mesurer la consommation (cheminée, poêle à bois, ...). Il suffit d'équiper le chauffage d'appoint d'un capteur de température permettant d'indiquer au dispositif selon la présente invention les moments de son fonctionnement.

La température intérieure peut varier en fonction du temps chronologique dans au moins les deux cas suivants :

- en raison de la gestion de la consommation (gestion optimale de l'énergie, températures de consigne différentes en fonction de l'heure et/ou du jour, ...),
- en raison de la consommation d'usage, la température peut augmenter au-delà de la température de régulation.

Dans le premier cas, il est préférable de tenir compte de ces informations de gestion d'énergie pour la construction du modèle et pour améliorer sa précision. Dans le second cas, il est préférable, pour augmenter la précision et/ou la fiabilité du diagnostic thermique, qu'au moins une mesure de température à l'intérieur du bâtiment ou de la partie de bâtiment soit prévue, ladite mesure étant alors réalisée avantageusement en un lieu où la température peut dépasser la température de régulation en raison notamment de la présence d'appareils d'usage à forte consommation d'énergie.

Dans le procédé de réalisation d'un diagnostic thermique selon l'invention, le modèle numérique peut être réalisé par une technique d'identification permettant de relier au moins une consommation d'énergie en cours à des mesures antérieures mémorisées concernant les conditions météorologiques extérieures et éventuellement les conditions d'utilisation du bâtiment, telles une ou plusieurs températures, une ou plusieurs indications de présence humaine, des paramètres concernant un système de ventilation, .... De manière générale, le procédé selon la présente invention peut prévoir avantageusement d'intégrer pour la création du modèle numérique toute information ayant une influence sur la consommation énergétique.

Dans un procédé de réalisation d'un diagnostic thermique selon l'invention, les caractéristiques thermiques et/ou énergétiques dérivées du modèle numérique sont de préférence des caractéristiques intrinsèques du bâtiment (ou de la partie de bâtiment). Elles sont par exemple choisies dans l'ensemble des caractéristiques contenant un coefficient de déperdition par transmission ($H_T$), des pertes d'énergie par transmission ($Q_T$, $Q_T^n$ ou $P_T$), des pertes par infiltration ($Qv$, $Q_V^n$ ou $P_V$), des gains solaires ($\eta Q_S$, $\eta Q_S^n$ ou $\eta P_S$, où $\eta$ est un coefficient global de rendement) et des fluctuations de $Q_T$, $Qv$, $Qs$ par rapport aux conditions météorologiques :

$$\delta Q_T = Q_T - Q_T^n$$

$$\delta Q_V = Q_V - Q_V^n$$

$$\delta Q_S = Q_S - Q_S^n.$$

Les quantités $Q_T$, $Qv$, $Qs$ peuvent être obtenues en appliquant le modèle aux données météorologiques effectives relevées. Les quantités $Q_T^n$, $Q_V^n$, $Q_S^n$ peuvent être obtenues en appliquant le modèle à des conditions météorologiques de référence ou normalisées, représentatives des conditions climatiques locales. Lorsque le modèle est alimenté par des données météorologiques stationnaires (par exemple, la température extérieure est fixée à 0 °C, la vitesse du vent est égale à 10m/s et le rayonnement solaire est égal à 300 W/m$^2$), le modèle finit par se stabiliser sur des puissances instantanées notées $P_T$, $P_V$, $P_S$. Ces calculs sont décrits d'une manière précise ci-dessous.

Un procédé selon la présente invention peut avantageusement émettre également des alertes. Un tel procédé de réalisation d'un diagnostic thermique comporte alors par exemple une étape de calcul d'une consommation de chauffage refroidissement avec le modèle numérique créé et les paramètres concernant la météorologie ainsi qu'une étape d'émission d'une alerte lorsque la consommation de chauffage refroidissement mesurée est sensiblement supérieure à une consommation de chauffage refroidissement calculée. Cette situation correspond par exemple à l'ouverture prolongée d'une porte ou d'une fenêtre alors que l'appareil de chauffage refroidissement fonctionne.

Pour un autre type d'alerte, le procédé de réalisation d'un diagnostic thermique comporte par exemple une étape de calcul de caractéristiques thermiques et/ou énergétiques avec le modèle numérique créé et les paramètres concernant la météorologie ainsi qu'une étape d'émission d'une alerte lorsque les caractéristiques calculées se dégradent en-deçà d'un seuil prédéterminé.

La consommation d'énergie est la sortie du modèle et les mesures antérieures des conditions météorologiques et des conditions d'utilisation du bâtiment ou d'une partie du bâtiment sont les paramètres d'entrée du modèle. Les paramètres d'entrée du modèle couvrent une durée allant de quelques heures pour les bâtiments à faible inertie thermique à quelques jours pour les bâtiments à forte inertie thermique. Pour améliorer les qualités de prédiction du modèle, il a un caractère récursif. Cela veut dire que les consommations antérieures, fournies par le modèle numérique, deviennent des paramètres d'entrée du modèle. Ces consommations antérieures véhiculent des informations sur la météorologie et les conditions d'utilisation antérieures du bâtiment et permettent de ce fait de limiter la connaissance de ces conditions d'utilisation à une période très courte et récente.

Le modèle numérique peut être par exemple un modèle récursif ne prenant en compte qu'un nombre réduit d'ensembles de données antérieures, par exemple cinq ensembles de données antérieures ou moins.

Le modèle ainsi construit permet d'établir :

- un diagnostic thermique du bâtiment ou d'une partie du bâtiment,
- une prédiction à court terme en vue du contrôle de la consommation énergétique,
- une prédiction de la consommation annuelle de l'énergie de chauffage en fonction de conditions météorologiques représentatives de la région,

- une consommation annuelle d'usage en fonction d'un scénario d'occupation,
- des scenarii d'économie d'énergie en fonction de la modification des caractéristiques thermiques du bâtiment, en vue d'aboutir à un projet d'innovation optimal.

La présente invention concerne également un dispositif de diagnostic, caractérisé en ce qu'il comporte des moyens pour la mise en oeuvre de chacune des étapes d'un procédé tel que décrit plus haut.

Des détails et avantages de la présente invention apparaitront mieux de la description qui suit, faite en référence au dessin schématique annexé sur lequel :

La figure 1 illustre schématiquement un bâtiment ainsi que les apports et les pertes énergétiques de celui-ci,
La figure 2 illustre schématiquement un dispositif pouvant être utilisé pour la mise en oeuvre de la présente invention,
La figure 3 illustre schématiquement une définition pour une température de calibrage telle qu'utilisée pour la mise en oeuvre de la présente invention, et
La figure 4 illustre une analogie électrique concernant la température de calibrage.

La présente description vise à déterminer d'une manière quantitative les caractéristiques thermiques intrinsèques d'un bâtiment et ce d'une manière à la fois précise et peu coûteuse.

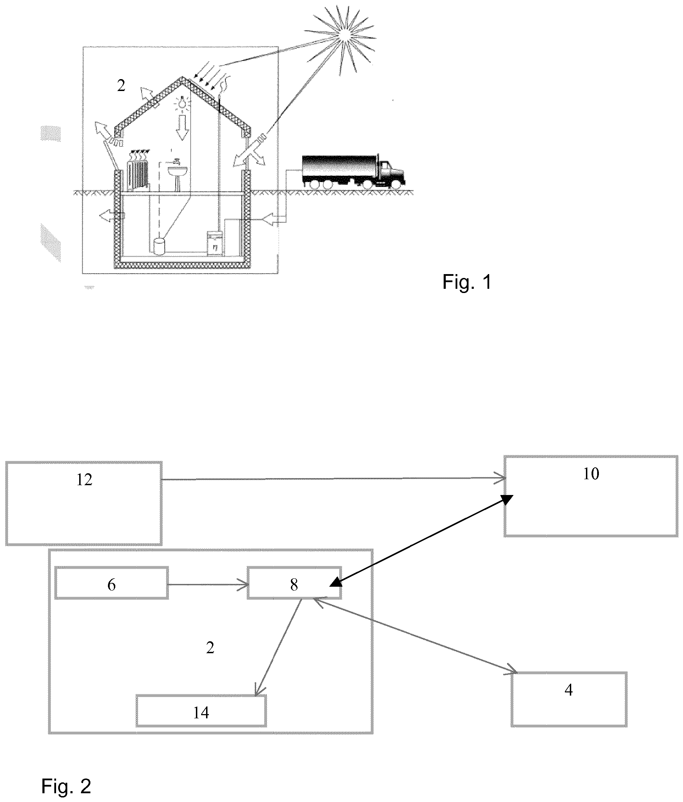

La figure 1 illustre un bâtiment 2 sous la forme très schématique d'une maison d'habitation. Toutefois la présente invention s'applique à tout type de bâtiment, qu'il s'agisse d'une maison d'habitation, d'un logement collectif, d'un appartement d'un tel logement, de bureaux, d'un bâtiment industriel, d'un bâtiment de bureaux, d'un bâtiment pour l'accueil du public, etc. Dans la suite de la description, le terme "bâtiment" sera utilisé pour désigner tout type de bâtiment mais aussi une ou plusieurs parties d'un bâtiment, par exemple un appartement ou un bureau ou un ensemble d'appartements ou de bureaux.

La figure 1 illustre aussi les apports d'énergie et les pertes d'énergie pour ce bâtiment. Les apports d'énergie proviennent notamment de :

- sources d'énergies externes illustrées schématiquement par un camion citerne mais comportant les apports énergétiques en mazout et/ou gaz et/ou électricité,
- rayonnement solaire, et
- éventuellement d'échanges thermiques avec l'extérieur lorsque la température extérieure est supérieure à la température intérieure. le flux thermique s'inverse et devient rentrant l'été.

Les pertes d'énergie correspondent notamment :

- à la consommation des divers appareils,
- au rendement différent de 1 de certains appareils de chauffage/ refroidissement,
- éventuellement aux échanges thermiques avec l'extérieur lorsque la température intérieure est supérieure à la température extérieure.

Tout ceci peut se résumer pour un bâtiment tel le bâtiment 2 illustré sur la figure 1 ou pour tout autre bâtiment ou parties de bâtiment par l'équation suivante :

$$Q_H = (Q_T + Q_V) - \eta \ (Q_S + Q_i) \hspace{3cm} (1)$$

où

$Q_H$ correspond à la demande énergétique du bâtiment,
$Q_T$ correspond à la quantité de chaleur échangée par transmission ; cette quantité de chaleur est liée aux matériaux employés pour les divers éléments séparant l'intérieur du bâtiment 2 de l'extérieur de celui-ci,
$Q_v$ correspond aux échanges thermiques par ventilation, c'est-à-dire les quantités de chaleur transportées par l'air entrant et sortant du bâtiment 2,
$\eta$ est un coefficient global correspondant à un rendement,
$Q_s$ correspond à la quantité de chaleur reçue par rayonnement,
$Q_i$ correspond aux quantités de chaleur provenant de sources de chaleur internes.

On a également l'équation suivante :

$$Q_T = H_T \ \Delta\Theta \ t$$

où

$H_T$ est le coefficient de déperdition par transmission du bâtiment,
$\Delta\Theta$ est une différence de température (entre l'extérieur et l'intérieur),
$t$ est une durée (temps).

Le coefficient de déperdition par transmission dépend des divers composants formant l'interface entre l'extérieur et l'intérieur du bâtiment :

$$H_T = \sum \left( F_{xi} U_i A_i \right) + \Delta U_{WB} A$$

où

$F_{xi}$ est un facteur de correction de température pour le composant i,
$U_i$ est la transmittance thermique du composant i,
$A_i$ est la surface d'échange du composant i,
$\Delta U_{WB}$ est un coefficient relatif aux ponts thermiques,
$A$ est la surface associée aux ponts thermiques.

Le dispositif permet de déterminer une valeur globale $H_T$ intégrant le terme correcteur de température $F_{xi}$, ainsi qu'une estimation de Qv, de Qs et de $Q_i$.
Il s'agit donc de déterminer pour le bâtiment 2 une valeur de $H_T$ de l'enveloppe et/ou les infiltrations et/ou les gains solaires et/ou le rendement du système de chauffage refroidissement. Pour réaliser cette détermination, les dépenses d'énergie liées à l'usage sont avantageusement attribuées à des facteurs bien précis. Sur la base de ces informations, la présente invention devient alors un outil précis de prédiction de la réponse thermique du bâtiment. Cet outil de prédiction permet de contrôler efficacement le système énergétique du bâtiment et d'identifier les sources d'amélioration des performances.

Une variante du procédé selon la présente invention peut également observer l'évolution des caractéristiques thermiques du bâtiment dans le temps, et intervenir en cas de dégradation de l'enveloppe du bâtiment et/ou de l'étanchéité et/ou du gain solaire et/ou du rendement du système de chauffage refroidissement.

En particulier, dans un contexte de rénovation d'un bâtiment, le modèle, selon la présente invention, permet de réaliser des scenarii et d'identifier les principales sources de réduction de consommation afin de planifier les travaux les plus appropriés : amélioration de l'isolation, amélioration de l'étanchéité, réparation/changement du système de chauffage refroidissement, ... Ce procédé permet d'estimer la réduction de consommation d'énergie attendue et sa vérification après travaux.

Il est proposé ici la création d'un modèle numérique qui admet comme variables d'entrée les conditions météorologiques et éventuellement les conditions d'utilisation du bâtiment (température intérieure, indicateur de présence, indicateur sur la ventilation mécanique, ...) et comme variable de sortie sa consommation énergétique. Les variables d'entrées peuvent être obtenues à partir de mesures effectuées et mémorisées mais on peut aussi envisager d'apprendre les résultats des mesures effectuées à la volée sans les mémoriser en utilisant, par exemple un filtre de Kalman.

Un modèle utilisé pour la mise en oeuvre de la présente invention est un modèle numérique qui présente les propriétés suivantes :

- Ce modèle peut évoluer en fonction du temps, son évolution traduisant alors une variation des propriétés intrinsèques du bâtiment,
- Ce modèle peut tenir compte de la présence humaine dans le bâtiment et être muni à cet effet d'une fonction d'erreur qui dépend du niveau d'occupation du bâtiment,
- Ce modèle peut tenir compte de l'effet d'un chauffage d'appoint via une augmentation de la fonction d'erreur. Par exemple, une sonde de température posée sur le chauffage d'appoint permet de détecter son fonctionnement,
- Ce modèle numérique permet de déduire un comportement statique du bâtiment. On peut alors par exemple en déduire la valeur de $H_T$ effective du bâtiment et d'autres grandeurs intrinsèques et d'usage.

La fonction d'erreur joue un rôle fondamental dans ce procédé. Le modèle traduit la réponse intrinsèque du bâtiment, de son système de chauffage refroidissement et de ventilation. Le modèle est destiné notamment à prédire la consommation d'énergie d'un bâtiment vide.

De ce fait, la présente invention fournit un outil de mesure de performances liées au bâtiment analysé et est mis à la disposition de professionnels du bâtiment, d'assureurs et d'usagers pour :

- déterminer les performances intrinsèques du bâtiment (c'est-à-dire les caractéristiques thermiques),
- déterminer les performances liées à son usage, c'est-à-dire la différence entre la consommation effective du bâtiment et la demande énergétique déterminée par le modèle,
- prédire une consommation énergétique,
- contrôler le système thermique du bâtiment.

Un dispositif pour la mise en oeuvre de la présente invention permet de déterminer des performances énergétiques d'un bâtiment, par exemple selon la répartition suivante pour une forme de réalisation préférée de l'invention :

P1 : Calcul de la résistance thermique de l'enveloppe $H_T$,
P2 : Calcul de Qv, les pertes d'énergie par infiltration et détection de problèmes d'étanchéité,
P3 : Calcul de $Q_s$ et détection de gains solaires médiocres,
P4 : Calcul du rendement r des appareils de chauffage ou de refroidissement,
P5 : Calcul de l'effet de conditions météorologiques exceptionnelles,
P6 : Problèmes liés à l'usage du bâtiment. Ces problèmes sont par exemple :

- des négligences en matière d'ouverture de portes et de fenêtres,
- un taux d'occupation/de vacance du bâtiment,
- un rythme particulier d'utilisation des locaux,
- un comportement des usagers (chauffage, eau chaude, éclairage, etc.),
- une modification du projet en cours de conception/réalisation,
- une insuffisance de maintenance-exploitation.

Les performances P1, P2, P3 et P5 concernent une performance intrinsèque du bâtiment lui-même, indépendamment de l'usage qui en est fait. Au stade de conception, le prestataire s'engage généralement à un niveau maximal de consommations énergétiques « conventionnelles » ou « normalisées » dans la mesure où l'utilisateur respecte le scénario d'utilisation et les paramètres de confort spécifiés. Il fournit alors une Garantie de Performance Energétique Intrinsèque (GPEI). Les performances P1, P2, P3 et P5 sont ainsi concernées par la GPEI. Le modèle permet de calculer une consommation annuelle de chauffage refroidissement lorsque le bâtiment est soumis à des conditions météorologiques conventionnelles représentatives de la région concernée. Cette consommation estimée peut être comparée à la consommation conventionnelle.

Une autre garantie est la garantie d'usage ou Garantie de Résultats Energétiques sur l'Usage (appelée GRE) : cette garantie incorpore l'exploitation et l'usage du bâtiment. Le prestataire s'engage cette fois sur un niveau maximal de consommations énergétiques réelles, exprimées en énergie finale et pouvant être mesurées par une méthode simple. La performance P6 est donc concernée pour la garantie GRE.

L'innovation permet d'estimer la consommation totale (de chauffage refroidissement et d'usage) en fonction de scenarii d'occupation et d'usage afin d'établir des objectifs de GRE atteignables. En outre, le procédé présenté ici a notamment pour but de fournir des moyens permettant d'indiquer si les résultats garantis sont obtenus et en outre de réaliser un diagnostic sur les performances énergétiques du bâtiment concerné.

Ces deux formes de garanties, GPEI et GRE, font partie de l'EPC (Energy Performance Contract) de la directive européenne EPBD (Energy Performance Building Directive).

À partir du moment où l'on dispose des caractéristiques thermiques du bâtiment, on peut proposer de nombreux services tels par exemple :

- rendre ces informations de diagnostic accessibles en continu aux usagers et aux personnes en charge de la maintenance via une interface utilisateur 4 (figure 2),
- lancer des alertes pour l'usage excessif et la maintenance,
- réaliser des outils de prédiction de la consommation énergétique,
- proposer des outils de prévision annuelle de consommation de refroidissement/chauffage et d'usage en fonction de conditions météorologiques représentatives des conditions climatiques locales et en fonction d'un certain nombre d'hypothèses d'usage. Cela n'est possible que si l'on connait les caractéristiques thermiques du bâtiment avec précision,
- proposer un mode automatique pour la gestion de l'énergie. Il est bien connu qu'il faut commencer par maîtriser la prédiction d'un système avant de pouvoir le contrôler,
- étudier plusieurs scenarii afin d'aboutir à un projet efficace de rénovation du bâtiment avec une estimation des économies d'énergie escomptée,
- vérifier les économies après travaux en neutralisant la fluctuation des conditions météorologiques.

Les informations mises à la disposition de l'usager et les alertes constituent un élément très déterminant pour réduire la consommation d'énergie. Si une garantie sur la consommation GRE a été contractée, cette garantie peut être suspendue par exemple si les alertes ne sont pas suivies d'effet.

Les performances énergétiques du bâtiment peuvent être déterminées à partir de :

- mesures effectuées selon une première modalité,
- mesures effectuées selon une deuxième modalité,
- une combinaison de ces deux modalités.

La première modalité est une modalité de test comportant les étapes suivantes :

- mesure de paramètres concernant la météorologie à l'aide de capteurs extérieurs au bâtiment ou à la partie du bâtiment ; ces informations peuvent être collectées à partir d'un site météorologique,
- mesure d'une consommation énergétique des appareils de chauffage refroidissement permettant le chauffage refroidissement du bâtiment ou de la partie de bâtiment.

Durant la période de test, l'utilisation de ces appareils peut différer des conditions d'utilisation usuelles. Une consommation d'usage peut être simulée pour les besoins du test.

La deuxième modalité s'applique au bâtiment en cours d'usage et comporte les étapes suivantes :

- mesure de paramètres concernant la météorologie à l'aide de capteurs extérieurs au bâtiment ; ces informations peuvent être collectées à partir d'un site météorologique,
- mesure de la consommation énergétique des appareils de chauffage refroidissement permettant le chauffage refroidissement du bâtiment ou de la partie de bâtiment (pour des appareils de rendements différents, il est préférable des compteurs de consommation énergétique différents),
- mesure de la consommation énergétique des autres appareils utilisés dans le bâtiment ou la partie de bâtiment.

Ces informations sont collectées par exemple en continu avec une périodicité suffisamment petite pour tenir compte de la dynamique des phénomènes observés. Dans une variante de réalisation, pour certaines situations, on peut par exemple préférer faire les mesures aléatoirement plutôt qu'avec une périodicité donnée. Pour un diagnostic ponctuel, le test peut durer de quelques jours à quelques semaines en été ou en hiver.

Le modèle proposé dans la présente description s'adapte aussi bien à des structures légères (maisons individuelles) qu'à de gros bâtiments. Il tient compte de l'inertie thermique du bâtiment et est de ce fait dynamique.

Pour la construction du modèle, il est proposé ici de procéder en trois étapes :

- s'assurer de la cohérence des données,
- construction du modèle en utilisant des parties contigües des données, et
- application du modèle en vue :

    i) de l'évaluation des caractéristiques thermiques du bâtiment, en appliquant le modèle à différents scenarii,
    ii) de la prédiction à court terme pour la gestion de la consommation d'énergie,
    iii) de la prédiction à long terme pour l'estimation de la consommation énergétique annuelle du bâtiment soumis à des données météorologiques de référence. On peut également appliquer le modèle à différents scenarii pour répondre aux questions (P1, P2, ...). Le modèle numérique peut être appliqué à des données statiques pour comparer avec certaines performances théoriques.

Le procédé selon la présente invention propose alors d'utiliser le modèle réalisé pour déterminer une température de calibrage qui est la température intérieure du bâtiment telle qu'elle est perçue par le système de chauffage refroidissement correspondant et dont dépend la consommation.

En prenant l'hypothèse d'un contexte purement conductif et stationnaire. On suppose alors qu'il y a absence de rayonnement solaire, absence de vent, .... En outre, en raison du régime stationnaire, il y a également absence d'effet capacitif. Par analogie, avec le domaine de l'électricité, on se retrouve dans un contexte que l'on peut représenter par un circuit résistif.

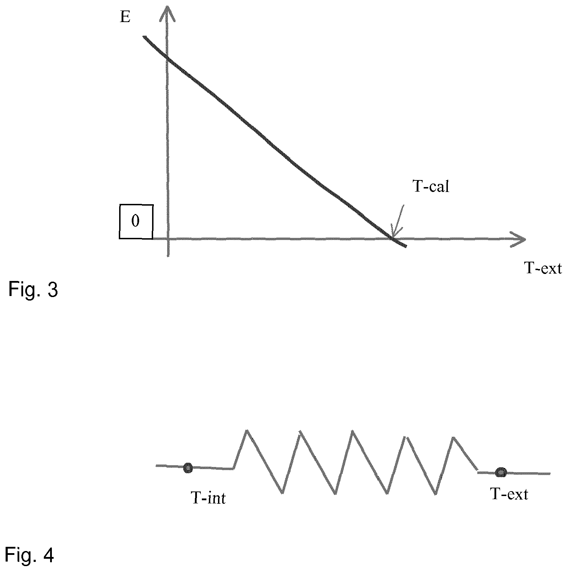

Dans cette hypothèse illustrée sur la figure 4, une résistance présente une borne (intérieure) soumise à une tension Tint inconnue et une seconde borne (extérieure) soumise à une tension variable connue, Text. On sait mesurer l'intensité du courant électrique circulant dans la résistance (c'est notre consommation d'énergie). Cette intensité est une fonction affine en fonction de Text. Lorsque Text=Tint, l'intensité s'annule. Tint est donc donnée par le point où l'intensité s'annule (cf. figure 3). Cette température correspond alors à la température de calibrage, ou Tcal.

La température de calibrage, telle qu'elle est définie, suppose que la température extérieure est une température de référence. Cette innovation couvre le cas où la température de référence est la température intérieure.

Dans l'exemple d'un bâtiment correspondant à un appartement d'un logement collectif, la consommation d'énergie d'un système de chauffage et/ou de refroidissement dépend de la température des appartements voisins. La température de calibrage est estimée selon la figure 3. C'est elle qui explique la consommation énergétique de l'appartement considéré.

De même, dans un logement collectif de grande taille, il est difficile de définir une carte de températures précise.

Il en est de même pour la température extérieure qui peut dépendre de la position du capteur.

La mesure de température intérieure et extérieure illustre la difficulté de la détermination précise de la performance énergétique qui dépend fortement de la différence entre ces deux températures mal connues. La notion de température de calibrage permet de résoudre ce problème.

Une température de calibrage globale pour le logement collectif peut être déterminée grâce au modèle proposé par l'invention. Cette notion de température de calibrage s'applique également aux maisons individuelles et aux bâtiments administratifs et d'entreprise où la distribution de la température est loin d'être uniforme. Cette notion permet de réduire le nombre de capteurs thermiques. Cette température de calibrage est avantageusement utilisée pour un traitement des points P1 à P5 évoqués plus haut.

De plus, le dispositif proposé par la présente invention ne repose pas sur un modèle détaillé du bâtiment. Il convient de noter qu'il est difficile, voire impossible, de construire un modèle physique détaillé pour un bâtiment ancien. De ce fait, le coût de mise en oeuvre de l'invention peut être réduit, notamment grâce à l'économie de l'installation d'un grand nombre de capteurs pour identifier les nombreux paramètres d'un modèle détaillé. Rappelons que la présente invention ne fait appel à aucune connaissance, même partielle, des caractéristiques thermiques et dimensionnelles du bâtiment.

La notion de température de calibrage permet ainsi d'éviter de connaître avec précision la carte thermique du bâtiment.

Le modèle numérique selon la présente invention (et décrit plus loin), peut être utilisé pour :

- obtenir le coefficient de déperdition par transmission $H_T$ de l'enveloppe du bâtiment et sa comparaison avec une valeur nominale du bâtiment. Cette valeur de $H_T$ est obtenue en alimentant le modèle avec des conditions météorologiques stationnaires : pas de vent, pas de rayonnement solaire, humidité relative faible, ... Seule la différence entre la température intérieure et la température extérieure compte. On peut étudier l'évolution de $H_T$ en fonction du temps et détecter un vieillissement prématuré de l'enveloppe. Ces résultats sont utiles pour tous les problèmes liés à la performance P1 ci-dessus,

- identifier des problèmes d'étanchéité (P2). En appliquant des données d'entrée statiques, on peut par exemple aussi donner une vitesse du vent assez forte (et éventuellement sa direction) ainsi qu'une différence de température. La différence entre la consommation avec vent et la consommation sans vent donne l'effet du vent.

À partir de la surconsommation d'énergie, liée au vent, et la différence entre la température intérieure et la température extérieure, on peut déterminer le débit d'air par infiltration. Ce calcul est à la base d'un contrôle optimal du renouvellement d'air. La ventilation mécanique peut être ajustée, tout en gardant un débit d'air constant. On peut même agir sur les ouvertures d'aération pour contrôler le débit d'air.

On peut examiner l'évolution de l'étanchéité en fonction du temps et détecter le vieillissement éventuel des jointures et des autres matériaux.

Les méthodes classiques de test d'étanchéité de l'art antérieur (infiltrométrie ou « blower door ») ne tiennent généralement pas compte du degré d'exposition du bâtiment au vent et peuvent déclarer un bâtiment non étanche, alors que, compte tenu de son emplacement protégé, ce défaut d'étanchéité n'a pas d'effet sur la consommation d'énergie. La réciproque est vraie également. De même l'augmentation de la consommation avec le vent n'est pas liée forcément à un problème d'étanchéité. Elle peut être liée par exemple à une lame d'air ventilée.

Le modèle numérique proposé dans la présente description permet aussi d'estimer un gain lié à l'énergie solaire (P3). L'écart par rapport au gain théorique ou par rapport à des gains constatés antérieurement, peut avoir plusieurs raisons telles par exemple :

- erreur de conception, problèmes de réalisation,
- mauvaise gestion des stores, des volets, ...

Grâce à la présente invention, il devient possible de contrôler ces dispositifs afin d'optimiser la consommation d'énergie.

Pour estimer le rendement d'un système de chauffage ou de refroidissement (P4), il est proposé de mesurer au moins deux consommations d'énergie :

- une correspondant au système de chauffage ou de refroidissement,
- une correspondant aux appareils domestiques. L'essentiel de l'énergie consommée par ces appareils est perdue en général par effet Joule. Un équipement domestique consomme le plus souvent de l'électricité. Une partie de la consommation d'usage est transformée par effet Joule et contribue de ce fait au chauffage du bâtiment. Normalement la consommation de chauffage doit baisser en conséquence. Par contre, en été, le contraire se produit et la consommation (de refroidissement) augmente avec la consommation des appareils d'usage. Cette compensation d'énergie permet de déterminer le rendement de l'appareil de chauffage refroidissement.

Lorsqu'une augmentation de la consommation est constatée (P5), le procédé permet d'estimer la quantité de surconsommation liée aux conditions météorologiques effectives. Il suffit d'appliquer le modèle aux données météorologiques relevées et aux données représentatives de la période étudiée. Il suffit de comparer les deux consommations ainsi obtenues pour estimer la variation de consommation liée aux conditions météorologiques.

Certains problèmes liés à l'usage du bâtiment (P6) sont mentionnés ci-après :

- négligences en matière d'ouverture de portes et de fenêtres. Ces négligences se manifestent par des pics de consommation, dont l'effet sur la consommation globale est facile à estimer,
- taux d'occupation/de vacance de l'immeuble, rythme d'utilisation des locaux. Cette information peut être obtenue d'une manière plus ou moins précise en fonction d'un indicateur de présence choisi (voir ci-dessous),
- comportement des usagers (chauffage refroidissement, eau chaude, éclairage, etc.). Ces consommations sont mesurées de préférence par des compteurs séparés (ou au moins un compteur spécifique, distinguant la consommation correspondante des consommations "thermiques" de chauffage / refroidissement,
- insuffisance de maintenance-exploitation. Ce point est intimement lié à l'estimation du rendement du système de chauffage refroidissement.

L'un des principaux aspects de la méthode de diagnostic proposée ici est son caractère non invasif. Elle s'adapte en effet à un bâtiment dans un contexte d'utilisation normale, selon la deuxième modalité, sauf éventuellement pour un test de courte durée supplémentaire destiné à compléter les données, selon la première modalité.

Une étude d'un bâtiment en cours d'utilisation prévoit de préférence un indicateur de présence humaine. En plus de la contribution humaine au bilan thermique du bâtiment, la présence humaine s'accompagne en général par une activité (douches, cuisine, ouverture et fermeture de portes et de fenêtres, ordinateurs de bureau, ...) qui rend l'analyse des données difficiles. Il ne s'agit pas forcément de connaitre cette présence avec précision mais il est proposé de juste disposer d'un indicateur permettant au modèle de gérer les erreurs et les incertitudes liées à la présence humaine. Un indicateur de présence humaine permet alors au modèle de réduire l'erreur lorsque le bâtiment est vide et d'accepter que cette erreur augmente lorsqu'il est occupé.

Ainsi, à titre d'exemple, des locaux d'entreprise sont souvent vides ou très faiblement occupés le week-end et la nuit. Grâce à cette information et une gestion appropriée du modèle d'erreur, le modèle peut s'écarter des données pendant les périodes où le bâtiment est occupé.

La présence peut être estimée de différentes manières dont quelques exemples sont donnés ici :

- connaissance du plan d'occupation/inoccupation humaine du bâtiment, connaissance de la périodicité de la présence (nuit, weekend, ...) pour les bâtiments administratifs, les écoles, ... Le bâtiment est par exemple vide pour effectuer un test de courte durée,
- détecteur de présence,
- mise du bâtiment sous alarme,
- détecteur à l'entrée/sortie d'un bâtiment,
- niveau de consommation d'énergie d'usage,
- mesure du taux d'humidité et/ou de gaz carbonique dans l'air,
- détecteur de consommation d'eau. Il ne s'agit pas forcément de mesurer la consommation d'eau mais lorsque des à-coups de consommation sont nombreux, ils témoignent, en général, de présence humaine.

Cette liste d'outils permettant de détecter la présence humaine, n'est pas exhaustive. Comme mentionné déjà, la présence humaine n'a pas besoin d'être estimée d'une manière précise et on ne sortirait pas du cadre de la présente invention si cette présence humaine n'était pas détectée. Le procédé selon l'invention ne repose pas sur ce type de détection. En effet, la consommation d'usage peut être un bon indicateur de présence humaine.

En outre, il est possible de faire une estimation de l'apport thermique lié à une présence humaine en s'appuyant sur des méthodes conventionnelles.

Une fonction d'erreur peut également être prévue dans la modélisation selon la présente invention, que l'on dispose d'un indicateur de présence humaine ou non.

D'une manière similaire, le modèle traite la contribution d'un chauffage d'appoint en acceptant une erreur du modèle plus importante.

Le procédé selon l'invention ne nécessite pas de connaître la température à l'intérieur du bâtiment mais, dans certains cas, une connaissance au moins partielle de celle-ci permet d'augmenter la précision des résultats obtenus. De toute façon, la mesure de température dans le bâtiment n'a pas besoin d'être cartographiée d'une manière précise. En effet, la température ambiante moyenne (ou température de calibrage définie plus haut) dans un bâtiment peut être estimée à partir des mesures de consommation et de l'évolution des conditions météorologiques.

Pour une meilleure adéquation entre le modèle numérique et les données mesurées, il est recommandé de prendre certaines précautions lorsque la température intérieure dépend du temps. Cette dépendance peut être voulue lorsqu'il y a plusieurs températures de régulation ou lorsque le système de chauffage refroidissement est coupé pendant certaines plages horaires. Cette dépendance peut également ne pas être voulue et être liée au fonctionnement de certains appareils d'usage gourmands en énergie.

Lorsque la température de régulation thermique n'est pas constante dans le temps (gestion optimale de l'énergie, températures de consigne différentes en fonction de l'heure et/ou du jour), il est recommandé que ces informations fassent partie des paramètres d'entrées du modèle au même titre que les données météorologiques. Cette information de régulation est disponible d'une manière naturelle lorsque le dispositif, selon la présente invention, prend en charge une régulation thermique.

Dans le cas où cette information de régulation n'est pas disponible, elle peut être détectée à travers une variation de la consommation d'énergie du système de chauffage refroidissement mesurée en adéquation avec les conditions météorologiques. Une gestion de l'erreur permet de construire un modèle précis même s'il y a des moments où l'information n'est pas précise. Les performances intrinsèques ainsi que la température de calibrage sont déterminées par exemple pour des conditions de forte consommation d'énergie de chauffage refroidissement, c'est-à-dire lorsque la température de régulation est haute en hiver et basse en été. Cependant pour améliorer la qualité du modèle, il est souhaitable d'avoir accès aux informations de régulation.

En l'absence de cette information, on pourrait prévoir l'installation de capteurs de température pour améliorer l'adéquation entre le modèle et les mesures de consommation, le but essentiel de ces capteurs étant de donner une évolution de la température en fonction du temps et non sa distribution spatiale. La distribution spatiale moyenne de la température peut être obtenue grâce à la notion de la température de calibrage.

Dans le cas où la variation de la température en fonction du temps n'est pas voulue, elle peut augmenter au-delà de la température de régulation en raison de la consommation d'énergie d'usage. Il n'est pas alors nécessaire de connaître la carte de température avec précision. Cette situation peut être détectée de deux manières différentes :

-   à travers l'augmentation de la consommation d'usage. Une fonction d'erreur permet de gérer une telle situation,
-   à travers des capteurs de température dans les pièces à forte consommation d'énergie : cuisine, salle de calcul, .... Dès que la température ambiante est susceptible de s'écarter de la température de confort en raison du fonctionnement de ces équipements, il est recommandé d'installer un capteur de température.

Un équipement domestique consomme le plus souvent de l'électricité. La plupart de la consommation est transformée par effet Joule et contribue de ce fait au chauffage du bâtiment. Normalement la consommation de chauffage doit baisser en conséquence. Par contre en été, le contraire se produit et la consommation (de refroidissement) augmente avec la consommation des appareils du bâtiment.

Certains appareils domestiques (four, plaques chauffantes, ...) sont assez gourmands en énergie et même lorsque le chauffage s'arrête, la température peut continuer à augmenter. Cela se traduit par une augmentation des pertes thermiques vers l'extérieur du bâtiment. Une partie de l'énergie consommée par exemple par un four en fonctionnement sert à chauffer le local et une autre partie est perdue. L'énergie perdue se traduit par un dépassement de la température de confort. L'approche proposée par la présente description permet d'évaluer la quantité d'énergie récupérée pour maintenir la température du local et ce qui a été perdu en raison d'une augmentation de la température ambiante intérieure.

La même analyse s'étend au cas de systèmes de confort thermiques de rendement différent de 1. Le système peut être utilisé pour le chauffage ou la climatisation. Dans un tel cas, il est alors recommandé de disposer d'au moins deux mesures de consommation d'énergie : une pour les appareils d'usage à effet Joule avec un rendement égal à 1 et une pour les (de préférence pour chaque) systèmes de chauffage refroidissement avec un rendement distinct de 1.

En l'absence de tels capteurs de température, il est également possible de s'appuyer sur un modèle de gestion de l'erreur. L'écart entre la consommation fournie par le modèle et la consommation mesurée peut augmenter lorsque la consommation d'usage augmente.

L'avantage de mettre un capteur de température dans les zones à forte consommation d'énergie est d'augmenter l'intervalle de temps où le modèle est en bonne adéquation avec les données.

Comme précisé ci-dessus, le modèle prévu dans la mise en oeuvre de la présente invention tient compte de la capacité thermique du bâtiment et est numérique. Il permet de lier les consommations aux conditions météorologiques extérieures mesurées et éventuellement aux informations sur l'utilisation du bâtiment (information sur le système de régulation, températures intérieures mesurées ou visées, indication et/ou la quantification éventuelle(s) de la présence humaine dans le bâtiment, informations sur la ventilation motorisée).

Le modèle numérique proposé a la possibilité d'évoluer d'une manière plus ou moins rapide en fonction du temps. Si les données collectées s'écartent d'une manière significative du modèle, cela traduit une modification de l'usage : changement de la température de consigne, portes/fenêtres ouvertes, ... Une alerte est alors lancée.

Avec les données d'utilisation du bâtiment, le modèle peut évoluer d'une manière régulière en fonction du temps. Si les performances intrinsèques, fournies par le modèle, se dégradent au-delà d'un certain seuil, on peut lancer une alerte ciblée sur la nature de la déviation : résistance de l'enveloppe du bâtiment, infiltrations, mauvais rendement solaire, rendement du système de chauffage refroidissement.

L'indicateur de présence humaine n'est utilisé que pour ajuster le modèle aux données. Le modèle peut s'écarter des données lorsque l'indicateur affiche une forte présence humaine.

Une fois que le modèle numérique est construit, on peut l'appliquer à des conditions météorologiques standardisées et avec une température intérieure maintenue à une valeur nominale pour calculer la performance effective du bâtiment.

Le modèle peut être n'importe quel processus de calcul numérique permettant de relier les consommations en cours à l'historique des conditions météorologiques (et éventuellement aussi de la température intérieure, de l'indication de présence et des conditions d'utilisation du bâtiment). Par exemple, le modèle peut être de la forme :

$$E_i = f\left(Te_i, Te_{i-1}...Te_{i-q}, V_i...V_{i-q}, S_i...S_{i-q}, I_i...I_{i-q}\right) + e_i \qquad (2)$$

où

les indices i, i-1, ..., i-q, sont les instants iΔt où les mesures ont été effectuées, Δt est un intervalle de temps qui peut être par exemple de l'ordre de 15 minutes,

$E_i$ : représente les pertes énergétiques durant l'intervalle de temps $[(i-1)\Delta t, i\Delta t]$. Il s'agit bien des pertes énergétiques avec ses deux composantes, la contribution de l'appareil de chauffage $E_{ci}$ et la contribution $E_{ui}$ de l'énergie d'usage. Nous avons donc

$$E_i = rE_{ci} + E_{ui}, \tag{3}$$

où r est le coefficient de rendement à identifier. Dans le cas d'un système de refroidissement,

$$E_i = rE_{ci} - E_{ui}, \tag{4}$$

$Te_i$ est la température extérieure à un instant $i\Delta t$ donné,

$V_i$ est la vitesse du vent qui peut avoir deux composantes l'intensité du vent et sa direction,

$S_i$ est le rayonnement solaire,

$I_i$ est une grandeur vectorielle représentant des informations optionnelles sur l'utilisation du bâtiment (Températures intérieures mesurées ou visées, informations sur la régulation et la gestion thermique du bâtiment, indication de présence humaine, information sur le système de ventilation, fonctionnement d'un chauffage d'appoint),

$e_i$ représente le modèle d'erreur. L'équation (2) ne peut avoir lieu qu'avec un terme d'erreur $e_i$ à ajuster en fonction de $I_i$, les informations sur l'utilisation du bâtiment.

Il convient de noter

$$P_i = f\left(Te_i, Te_{i-1}...Te_{i-q}, V_i...V_{i-q}, S_i...S_{i-q}, I_i...I_{i-q}\right),$$

qui représente les pertes énergétiques par chauffage refroidissement à travers la surface extérieure du bâtiment ou de la partie du bâtiment. Ces pertes ont un caractère intrinsèque au bâtiment et permettent d'établir son diagnostic thermique. Ces pertes tiennent compte des pertes par transmission, des pertes par infiltration d'air et des gains solaires.

Lorsque l'on ne dispose que d'une consommation énergétique globale sans distinction entre les consommations de chauffage refroidissement et celles d'usage, il est toujours possible de reconstruire le modèle f en s'appuyant sur les périodes où la consommation d'usage est faible. Ces périodes peuvent être identifiées par une consommation totale relativement faible en comparaison avec les conditions météorologiques.

Dans le cas où l'on traite plusieurs parties de bâtiments, Ei est une sortie multiple. Chaque sortie correspond à une partie du bâtiment. Il en est de même pour les informations li, qui peuvent être spécifiques à chaque partie.

Si l'on note Etot$_i$, la consommation d'énergie totale du bâtiment ou d'une partie du bâtiment, la consommation d'usage, qui n'a pas contribué au chauffage refroidissement, est donnée par Etot$_i$-P$_i$.

La fonction f est à construire à partir des données. Elle peut être tout simplement une fonction polynomiale ou même linéaire.

La fonction f dépend d'un certain nombre de paramètres à identifier. Ces paramètres peuvent tout simplement être les coefficients du polynôme à plusieurs variables qui définit f.

Il apparait clairement qu'aucune information sur les caractéristiques thermiques et dimensionnelles du bâtiment n'est utilisée pour la construction du modèle, contrairement aux procédés existants. Le modèle créé, s'affranchissant des caractéristiques thermiques et dimensionnelles du bâtiment, se base en fait sur le modèle de l'erreur. Il permet de construire un modèle de demande énergétique intrinsèque au bâtiment en s'appuyant sur les données collectées lorsque le bâtiment est vide. Non seulement le modèle de l'erreur permet d'étendre le domaine de validité du modèle, mais en plus, il permet d'établir une incertitude sur les performances estimées. Dans les procédés de l'art antérieur, la connaissance a priori des caractéristiques thermiques et dimensionnelles du bâtiment jouent un rôle majeur dans le processus d'identification du modèle et finalement dans le diagnostic thermique.

La modélisation peut être réalisée en plusieurs étapes. Les données disponibles sont par exemple partagées en deux parties. Une première partie I sert à construire le modèle et une seconde partie II sert ensuite à le valider.

L'identification du modèle se fait en minimisant l'écart pour tout i de la première partie I entre la consommation obtenue par simulation

$$Esim_i = f\left(Te_i, Te_{i-1}...Te_{i-q}, V_i...V_{i-q}, S_i...S_{i-q}, I_i...I_{i-q}\right)$$

et la consommation mesurée $E_i$. La minimisation se fait en identifiant les paramètres de f. Dans le cas où f est un polynôme, les paramètres à identifier ne sont autres que ses coefficients. L'écart accepté entre $Esim_i$ et $E_i$ dépend de l'indicateur de présence humaine (dans la mesure où celui-ci est utilisé : dans le cas contraire, la consommation d'usage peut être un bon moyen pour contrôler l'erreur).

La validation se fait en utilisant la deuxième partie de données. Elle a pour but de comparer la réponse du modèle

$$Esim_i = f\left(Te_i, Te_{i-1}...Te_{i-q}, V_i...V_{i-q}, S_i...S_{i-q}, I_i...I_{i-q}\right)$$

et $E_i$ pout tout i de la seconde partie II.

Le modèle est ensuite appliqué à des conditions conventionnelles de fonctionnement du bâtiment supposé être non occupé, pour en déduire la GPEI.

Il existe plusieurs manières pour réaliser la modélisation. On a choisi une modélisation récursive.

Dans ce cas, dans le modèle proposé en (2) $E_{i-1}$ prend en compte les conditions météorologiques et les conditions d'utilisation du bâtiment antérieures à (i-1)Δt et l'on peut mener ce raisonnement de proche en proche pour proposer le modèle récursif :

$$E_i = f\left(E_{i-1}...E_{i-q1}, Te_i, Te_{i-1}...Te_{i-q2}, V_i...V_{i-q2}, S_i...S_{i-q2}, I_i...I_{i-q2}\right) + e_i \quad ,$$

où q1 et q2 sont très petits en comparaison avec q, le nombre de termes pris en compte dans le modèle (2). Cela se traduit par une réduction du nombre des coefficients à identifier. En général q1 et q2 sont de l'ordre de 3. Cela permet d'améliorer la qualité de prédiction du modèle.

Ces modèles sont donnés à titre d'exemple et d'autres modélisations peuvent également être envisagées pour déterminer un modèle décrivant la réponse thermique intrinsèque du bâtiment.

À partir du moment où l'on se ramène à un modèle récursif, on peut simuler le modèle numérique par un modèle ayant un petit nombre d'entrées. On peut alors faire appel aux outils très populaires tel que le Krigeage, les réseaux neuronaux, SVM (Support Vector Machine), ...

Un dispositif matériel est prévu pour la mise en oeuvre d'un procédé selon la présente invention.

Comme déjà mentionné plus haut, il n'est pas nécessaire de mesurer la température intérieure et encore moins de cartographier la température d'ambiance dans tout le bâtiment. La température moyenne intérieure est donnée par la température de calibrage. Elle est obtenue à partir du modèle.

Cette température de calibrage ne doit pas être affectée par les pics de températures liés à l'utilisation d'appareils domestiques. La mesure de ces pics, si possible avec précision, permet d'augmenter la fiabilité du modèle et d'étendre sa durée de validité aux moments de surchauffe liés à la consommation d'usage. Dans le cas où cette mesure de température intérieure n'est pas disponible, le modèle peut, en se basant sur le niveau élevé de la consommation d'usage, accepter une erreur plus importante.

De même si la température de régulation n'est pas fixe, il est souhaitable d'avoir accès aux températures de régulation ou à la température effective mesurée. Cela permet d'étendre également la durée de validité du modèle. Si ces informations ne sont pas disponibles, le modèle peut détecter les moments de forte consommation d'énergie de chauffage (ou de refroidissement). Les performances intrinsèques sont alors déterminées pour les périodes où le système de chauffage refroidissement fonctionne d'une manière intensive.

Les appareils ayant des rendements différents doivent être de préférence mesurés par des compteurs séparés. Sinon, une moyenne statistique peut être utilisée.

On peut utiliser un ou plusieurs indicateurs de présence humaine. On n'a pas besoin d'une estimation précise de cette présence. Cette information est un indicateur qui permet au modèle de coller plus ou moins avec les données.

Les données météorologiques peuvent être collectées à partir d'une mini station météorologique locale ou bien collectées à partir d'un centre météorologique (via une liaison Internet par exemple).

Dans le cas d'une ventilation mécanique qui fonctionne d'une manière discontinue, il est préférable de relever l'état du ventilateur et/ou son débit pour mieux estimer les pertes par ventilation. On peut également se baser sur des caractéristiques nominales d'une ventilation à débit constant.

Les pertes par une ventilation naturelle sont avantageusement estimées avec les autres types d'infiltrations.

Une implémentation du dispositif pour la mise en oeuvre de la présente invention est illustrée à titre d'exemple sur la figure 2.

Des données collectées par des capteurs 6 à l'intérieur du bâtiment 2 sont envoyées à un boîtier 8 électronique, tel par exemple un ordinateur à base d'un processeur basse consommation connecté à Internet.

Le boîtier 8 envoie à son tour ces données sur un serveur distant 10, par exemple un serveur "virtuel", connu également sous le nom de "cloud" (signifiant nuage en anglais).

Dans la forme de réalisation représentée sur la figure 2, on a supposé que des capteurs 12 extérieurs, regroupés par exemple dans une station météorologique locale dédiée, ou bien des données d'un centre météorologique, communiquaient au boitier 8 les valeurs mesurées par l'intermédiaire du serveur distant 10.

Le modèle est construit et préférablement mis à jour sur le serveur distant 10.

Une copie du modèle est envoyée sur le boîtier 8 pour contrôler l'installation afin de minimiser la consommation d'énergie. Ce contrôle peut s'effectuer en agissant sur au moins un actionneur 14. Un ou plusieurs actionneurs peuvent être intégrés au boîtier.

L'usager peut se connecter, à travers l'interface utilisateur 4 évoquée déjà plus haut sur le boîtier 8 pour avoir des informations sur l'évaluation de la consommation et pour fixer les paramètres du programme de contrôle. Les alertes viennent du boîtier 8 et sont communiquées par l'interface utilisateur 4.

Comme nous l'avions vu ci-dessus, la mesure des conditions météorologiques et éventuellement de températures intérieures permettent de décomposer la consommation d'un appareil ménager en deux parties, une partie qui a contribué à maintenir la température du bâtiment à la température de confort et une surconsommation éventuelle qui mène alors au dépassement de cette température.

Le modèle numérique obtenu ci-dessus peut être alors appliqué à des conditions météorologiques stationnaires, adaptées pour réaliser une évaluation du coefficient de déperdition par transmission $H_T$ : absence de vent, absence de rayonnement solaire, humidité relative faible, faible occupation du bâtiment, ... Cela veut dire que dans le modèle (2), nous posons $Te_i = Te_{i-1} = .. = Te_{i-q} = Te$, où Te est donnée, $V_i = ... = V_{i-q} = S_i = ... = S_{i-q} = 0$ et $I_i = ... = I_{i-q}$ sont fixés à une valeur constante qui traduit l'absence de ventilation mécanique, pas de présence humaine, une température de régulation donnée que l'on note Ti, ... Ces conditions stationnaires donnent une valeur constante de Esim. Le coefficient de déperdition par transmission $H_T$ est alors donnée par :

$$H_T = (Esim/\Delta t)/(Ti-Te)$$

en hiver et

$$H_T = (Esim/\Delta t)/(Te-Ti),$$

Ti est la température intérieure, qui peut être représentée par Tcal, la température de calibrage.

Le modèle permet d'établir la valeur de $H_T$ de l'enveloppe et la comparer avec la valeur de $H_T$ établie préalablement, par exemple par une valeur déterminée par les normes en vigueur.

Si la différence est importante, la cause en est peut-être :

- un problème de conception ou de mise en oeuvre,
- une modification par rapport au plan d'origine,
- un vieillissement.

Si le dispositif est appliqué d'une manière continue, la différence est constatée dès le début pour le premier cas. Pour le deuxième cas, la différence entre le $H_T$ mesuré et le $H_T$ conventionnel subit une discontinuité liée à la modification par rapport à l'origine. Avec le vieillissement, la différence se creuse au cours des années.

La consommation d'énergie par transmission $Q_T$ peut être calculée de deux manières différentes :

$$Q_T = \sum_i H_T \, (Ti_i - Te_i) \, \Delta t$$

$$Q_T = \sum_i f\left(E_{i-1}, ..., E_{i-q_1}, Te_i, ..., Te_{i-q_2}, 0, ..., 0, 0, ..., 0, I_1, ..., I_{i-q_2}\right),$$

où Vi et Si ont été mis à zéro et les Ii ont la même valeur que pour calculer $H_T$ et peuvent inclure une température de consigne Ti.

Ensuite, on peut calculer :

$$Q_{TV} = \sum_i f\left(E_{i-1}, \dots, E_{i-q_1}, Te_i, \dots, Te_{i-q_2}, V_0, \dots, V_{i-q_2}, 0, \dots, 0, I_0, \dots, I_{i-q_2}\right),$$

les pertes par infiltrations sont alors données par :

$$Q_V = Q_{TV} - Q_T.$$

Pour estimer les gains solaires $Q_S$, on commence par calculer :

$$Q_{TVS} = \sum_i f\left(E_{i-1}, \dots, E_{i-q_1}, Te_i, \dots, Te_{i-q_2}, V_0, \dots, V_{i-q_2}, S_0, \dots, S_{i-q_2}, I_0, \dots, I_{i-q_2}\right),$$

ce qui donne :

$$\eta Q_S = Q_{TV} - Q_{TVS}.$$

où $\eta$ est un coefficient donné par la formule (1).

Pour tenir compte des fluctuations des conditions météorologiques, les quantités $Q_T$, $Q_V$ et $Q_S$, peuvent être calculées en appliquant le modèle à des données dynamiques de référence $T_i^n$, $V_i^n$ et $S_i^n$ pour obtenir $Q_T^n$, $Q_V^n$ et $Q_S^n$ . Ces données de référence sont des conditions météorologiques représentatives du climat local du bâtiment. La variation de la consommation liée aux fluctuations des conditions météorologiques est alors :

$$\delta Q_T = Q_T - Q_T^n$$

$$\delta Q_V = Q_V - Q_V^n$$

$$\delta Q_S = Q_S - Q_S^n.$$

De même, le modèle peut être alimenté par des données statiques, par exemple Te=0°C, V=10 m/s, S=300 W/m2. Le modèle finit par se stabiliser sur des puissances stationnaires :

$$P_T = Q_T/t$$

$$P_V = Q_V/t$$

$$P_S = Q_S/t$$

où $t = N*\Delta t$ et $N$ est le nombre de pas de temps effectués pour atteindre la convergence.

Ces performances quantitatives sont assorties d'une marge d'erreur. Le terme d'erreur $e_i$ est à la base du procédé de calcul d'incertitude. La norme (Guide to the expression of uncertainty in measurement GUM JCGM 100:2008) est utilisée à cet effet.

On peut difficilement dissocier les problèmes d'infiltration des problèmes de ventilation. La ventilation peut être effectuée d'une manière naturelle ou automatique. Dans le cas d'une ventilation automatique, elle peut être effectuée d'une manière continue ou discontinue.

Les pertes par ventilation automatique sont soustraites de la consommation globale du système de chauffage refroidissement. Elles peuvent être estimées de plusieurs manières :

- mesure de la consommation électrique du ventilateur,
- mesure du flux d'air de la ventilation,
- à partir de la perte nominale pour des ventilateurs à débit constant.

Comme expliqué ci-dessus, le modèle proposé permet d'estimer la consommation liée aux infiltrations naturelles. C'est l'indicateur I, qui neutralise la ventilation mécanique dans les calculs de $Q_T$, $Q_V$ et $Q_S$.

En raison des compensations thermiques par effet Joule entre les équipements d'usage et le chauffage, le processus d'identification peut trouver le coefficient r de rendement du chauffage utilisé, en utilisant l'équation (3). Ce coefficient peut être comparé au coefficient nominal et déclencher éventuellement une alerte.

Le gaz peut être utilisé pour différents usages comme par exemple pour des tables de cuisson. Dans une telle configuration, l'utilisation d'au moins un détecteur de présence est avantageuse.

Grâce à des mesures en continu, un éventuel défaut de la chaudière peut être détecté rapidement. Si l'écart se creuse entre le rendement nominal et le rendement estimé au fil du temps, le système lance de préférence une alerte de maintenance de la chaudière.

Pour estimer alors le rendement r, défini par (3) et (4), du système de chauffage refroidissement, il suffit de corréler les éléments suivants :

- les conditions météorologiques,
- la consommation du dispositif dont on veut mesurer le rendement,
- la consommation de dispositif dont le rendement est connu (égal à 1),
- la température extérieure de rejet.

Dans le cas de l'utilisation d'une pompe à chaleur pour une climatisation, la chaleur dégagée par effet Joule par les appareils domestiques se traduit par une augmentation de la consommation de la pompe à chaleur. Ce processus peut être appliqué aux appareils de refroidissement et permet de déterminer le coefficient de rendement r de la pompe à chaleur (ou autre appareil de refroidissement), de le comparer à sa valeur nominale et de déclencher éventuellement une alerte.

À chaque instant un utilisateur, qui dispose d'un identifiant et d'un mot de passe, dans un mode de réalisation de l'invention, peut accéder à partir de l'interface utilisateur 4 aux informations suivantes :

- performance intrinsèque de l'enveloppe.
- détection d'infiltration d'air en corrélant la consommation avec la vitesse du vent.
- rendement du système de chauffage et de refroidissement.

Ces informations peuvent être moyennées sur une période plus ou moins courte déterminée par l'utilisateur.

Des conseils peuvent être également générés pour conseiller aux utilisateurs une stratégie de réduction de la consommation. En particulier, une stratégie de rénovation efficace peut être déterminée en étudiant plusieurs scénarii de rénovation et leurs impacts sur la réduction de la consommation.

Cette estimation peut être comparée avec la réduction effective de la facture énergétique après travaux.

Le système peut mettre à la disposition de l'usager sa consommation d'usage.

Selon le cas, elle peut être décomposée de la manière suivante :

- consommation qui a contribué au chauffage,
- consommation d'équipements domestiques ou de bureau et surconsommation de climatisation provoquée par la consommation d'usage.

Dans le cas d'une garantie d'usage des alertes peuvent être générées. Si les alertes ne sont pas suivies d'effet, la garantie peut être suspendue.

L'installation peut aussi être contrôlée d'une manière automatique. En utilisant le cas échéant un détecteur de présence, la température peut être adaptée en fonction de la présence ou l'absence d'occupants. Le détecteur de présence peut être par exemple couplé à un système de sécurité du bâtiment. En plus da la gestion du système de chauffage refroidissement, Le dispositif (via par exemple le boîtier (8) peut piloter l'ouverture et la fermeture des volets et les stores pour améliorer les performances thermiques du bâtiment. Il peut contrôler le système de ventilation et l'ouverture des bouches d'aération. À cet effet, des actionneurs 14 sont prévus dans le dispositif de la figure 2.

La mise en oeuvre de la présente invention peut se baser sur l'utilisation d'un nombre de types de mesure très limité (consommation d'usage, consommation de chauffage refroidissement, conditions météorologiques, conditions d'utilisation du bâtiment) pour déduire les performances thermiques intrinsèques et d'usage du bâtiment.

La présente invention propose d'utiliser un concept de température de calibrage estimée à partir du modèle mathématique. Cette température de calibrage correspond à la température moyenne du bâtiment telle qu'elle est perçue par un système de chauffage refroidissement associé au bâtiment considéré. La mise en oeuvre de l'invention ne nécessite pas de connaissance précise de la carte de températures, même lorsqu'elle n'est pas uniforme.

Le procédé selon l'invention prévoit, en résumé, la création d'un modèle numérique ayant pour entrée des conditions météorologiques et des conditions d'utilisation du bâtiment et pour sortie des consommations énergétiques. Le modèle n'utilise pas d'informations a priori sur les dimensions du bâtiment et sur son mode de construction.

Pour déterminer les caractéristiques intrinsèques du bâtiment étudié, un modèle numérique exprime la réponse du bâtiment en fonction des conditions météorologiques et d'utilisation. L'application de ce modèle à des conditions météorologiques statiques ou de référence, permet de séparer et d'identifier les performances intrinsèques liées à la perte par transmission, par convection et aux gains solaires du bâtiment. Pour chaque critère, un jeu de données adéquat est appliqué au modèle.

À partir de ces caractéristiques intrinsèques, il devient possible d'attribuer l'origine d'une surconsommation à des conditions météorologiques exceptionnelles ou à des problèmes d'usage comme détaillé plus haut.

Le dispositif proposé par la présente invention est non invasif et peut s'appliquer à n'importe quel type de bâtiments. Une fonction d'erreur peut être prévue pour permettre de gérer le manque d'informations concernant par exemple l'occupation du bâtiment ou l'effet d'appareils à forte consommation d'énergie. Dans les deux cas, une fonction d'erreur peut être associée au modèle pour gérer le manque d'information.

Le nombre de capteurs nécessaires au fonctionnement du dispositif est limité. Il n'est pas nécessaire de disposer d'une carte des températures précise du bâtiment. Le modèle proposé par l'invention permet de déterminer une température de calibrage telle que définie plus haut. Elle correspond à une estimation de la température moyenne du bâtiment. Elle permet d'étudier aussi bien un gros bâtiment qu'un ou plusieurs appartements munis de compteurs d'énergie individuels.

La présente invention ne se limite pas aux formes de réalisation préférées décrites ci-dessus à titre d'exemples non limitatifs et aux variantes évoquées mais elle concerne toutes les variantes à la portée de l'homme du métier dans le cadre des revendications ci-après.

## Revendications

1. Procédé de réalisation d'un diagnostic thermique d'un bâtiment ou d'une partie d'un bâtiment, occupé ou non, comportant des appareils de chauffage refroidissement permettant le chauffage refroidissement du bâtiment ou d'une partie de bâtiment, ainsi que des appareils d'usage situés à l'intérieur du bâtiment ou d'une partie de bâtiment, ledit procédé présentant les étapes suivantes :

   - d'acquisition de paramètres concernant la météorologie,
   - de mesure d'une consommation énergétique des appareils de chauffage refroidissement et des appareils d'usage, dans lequel :

      - un modèle numérique est créé à partir de paramètres d'entrée pris parmi au moins une partie des mesures et acquisitions réalisées, ledit modèle numérique étant un modèle récursif reliant une demande d'énergie de chauffage refroidissement à un nombre prédéterminé desdits paramètres d'entrée, et
      - un diagnostic thermique est réalisé en alimentant ledit modèle numérique avec des données météorologiques choisies afin de dériver dudit modèle numérique des caractéristiques thermiques et/ou énergétiques du bâtiment ou d'une partie du bâtiment.

2. Procédé de réalisation d'un diagnostic thermique selon la revendication 1, **caractérisé en ce qu'**une température de calibrage est déterminée, température de calibrage qui, pour des paramètres météorologiques et d'utilisation du bâtiment ou d'une partie du bâtiment donnés, correspond à une consommation d'énergie de chauffage refroidissement nulle, permettant d'estimer la température intérieure et de réaliser le diagnostic thermique du bâtiment ou d'une partie d'un bâtiment.

3. Procédé de réalisation d'un diagnostic thermique selon l'une quelconque des revendications précédentes, **caractérisé en ce que** des mesures distinctes de la consommation énergétique des appareils d'usage et de la consommation énergétique des appareils de chauffage refroidissement sont réalisées.

4. Procédé de réalisation d'un diagnostic thermique selon l'une quelconque des revendications précédentes, **caractérisé en ce que** ledit procédé comporte en outre une étape de détermination du rendement des appareils de chauffage refroidissement à partir d'une mesure distincte de la consommation énergétique entre les appareils d'usage de rendement thermique égal à 1 et les appareils de chauffage refroidissement d'un rendement thermique différent de 1.

5. Procédé de réalisation d'un diagnostic thermique selon l'une quelconque des revendications précédentes, **caractérisé en ce que** les paramètres concernant la météorologie sont choisis dans l'ensemble comportant la température extérieure, la vitesse du vent, la direction du vent, l'ensoleillement.

6. Procédé de réalisation d'un diagnostic thermique selon l'une quelconque des revendications précédentes, **caractérisé en ce que** des paramètres météorologiques sont obtenus à l'aide de capteur extérieurs au bâtiment ou à la partie de bâtiment.

7. Procédé de réalisation d'un diagnostic thermique selon l'une quelconque des revendications précédentes, **caractérisé en ce que** des paramètres météorologiques sont obtenus à partir de données d'un site Internet.

8. Procédé de réalisation d'un diagnostic thermique selon l'une quelconque des revendications précédentes, **caractérisé en ce qu'**il prévoit également une mesure permettant de déterminer et/ou de quantifier une présence humaine dans le bâtiment ou dans la partie de bâtiment concerné.

9. Procédé de réalisation d'un diagnostic thermique selon l'une quelconque des revendications précédentes, **caractérisé en ce qu'**il prévoit également au moins une mesure de température à l'intérieur du bâtiment ou de la partie de bâtiment, ladite mesure étant réalisée en un lieu susceptible d'être plus chaud que le reste du bâtiment ou de la partie de bâtiment, en raison de la consommation d'usage.

10. Procédé de réalisation d'un diagnostic thermique selon l'une quelconque des revendications précédentes, **caractérisé en ce qu'**il prévoit également d'intégrer dans la création du modèle numérique toute information ayant une influence sur la consommation énergétique, telle que par exemple les paramètres concernant un système de ventilation.

11. Procédé de réalisation d'un diagnostic thermique selon l'une quelconque des revendications précédentes, **caractérisé en ce que** les caractéristiques thermiques et/ou énergétiques dérivées du modèle numérique sont choisies dans l'ensemble des caractéristiques contenant un coefficient de déperdition par transmission ($H_T$), des pertes d'énergie par transmission ($Q_T$, $Q_T^n$ ou $P_T$), des pertes par infiltration ($Q_V$, $Q_V^n$ ou $P_V$), des gains solaires ($\eta Q_S$, $\eta Q_S^n$ ou $\eta P_S$) et des fluctuations de $Q_T$, $Q_V$, $Q_S$ par rapport aux conditions météorologiques :

$$\delta Q_T = Q_T - Q_T^n$$

$$\delta Q_V = Q_V - Q_V^n$$

$$\delta Q_S = Q_S - Q_S^n.$$

12. Procédé de réalisation d'un diagnostic thermique selon l'une quelconque des revendications précédentes, **caractérisé en ce qu'**il comporte une étape de calcul d'une consommation de chauffage refroidissement avec le modèle numérique créé et les paramètres concernant la météorologie ainsi qu'une étape d'émission d'une alerte lorsque la consommation de chauffage refroidissement mesurée est sensiblement supérieure à une consommation de chauffage refroidissement calculée.

13. Procédé de réalisation d'un diagnostic thermique selon l'une quelconque des revendications précédentes, **caractérisé en ce qu'**il comporte une étape de calcul de caractéristiques thermiques et/ou énergétiques avec le modèle numérique créé et les paramètres concernant la météorologie ainsi qu'une étape d'émission d'une alerte lorsque les caractéristiques calculées se dégradent en-deçà d'un seuil prédéterminé.

14. Dispositif de diagnostic, **caractérisé en ce qu'**il comporte des moyens pour la mise en oeuvre de chacune des étapes d'un procédé selon l'une quelconque des revendications 1 à 13.

**Patentansprüche**

1. Verfahren zum Ausführen einer thermischen Diagnose eines genutzten oder ungenutzten Gebäudes oder eines Teils eines Gebäudes, das Heiz-/Kühlgeräte, die das Heizen/Kühlen des Gebäudes oder eines Gebäudeteils ermöglichen, sowie übliche Geräte umfasst, die sich im Inneren des Gebäudes oder eines Gebäudeteils befinden, wobei das Verfahren die folgenden Schritte aufweist:

- Aufzeichnen von Parametern, die das Wetter betreffen,
- Messen eines Energieverbrauchs der Heiz-/Kühlgeräte und der üblichen Geräte, wobei:

- auf Grundlage von Eingangsparametern, die aus mindestens einem Teil der ausgeführten Messungen und Aufzeichnungen entnommen werden, ein digitales Modell erstellt wird, wobei das digitale Modell ein rekursives Modell ist, das einen Heiz-/Kühlenergiebedarf mit einer vorbestimmten Anzahl der Eingangsparameter verbindet, und
- eine thermische Diagnose ausgeführt wird unter Speisen des digitalen Modells mit ausgewählten Wetterdaten, um aus dem digitalen Modell thermische und/oder energetische Eigenschaften des Gebäudes oder eines Teils des Gebäudes abzuleiten.

2. Verfahren zum Ausführen einer thermischen Diagnose nach Anspruch 1, **dadurch gekennzeichnet, dass** eine Kalibrierungstemperatur bestimmt wird, Kalibrierungstemperatur, die für gegebene Wetter- und Nutzungsparameter des Gebäudes oder eines Teils des Gebäudes einem Heiz-/Kühlenergieverbrauch von gleich Null entspricht, was es ermöglicht, die Innentemperatur zu schätzen und die thermische Diagnose des Gebäudes oder eines Teils eines Gebäudes auszuführen.

3. Verfahren zum Ausführen einer thermischen Diagnose nach einem der vorstehenden Ansprüche, **dadurch gekennzeichnet, dass** getrennte Messungen des Energieverbrauchs der üblichen Geräte und des Energieverbrauchs der Heiz-/Kühlgeräte ausgeführt werden.

4. Verfahren zum Ausführen einer thermischen Diagnose nach einem der vorstehenden Ansprüche, **dadurch gekennzeichnet, dass** das Verfahren weiter einen Schritt des Bestimmens des Wirkungsgrads der Heiz-/Kühlgeräte auf Grundlage einer getrennten Messung des Energieverbrauchs zwischen den üblichen Geräten mit einem thermischen Wirkungsgrad von gleich 1, und den Heiz-/Kühlgeräten mit einem thermischen Wirkungsgrad von ungleich 1 umfasst.

5. Verfahren zum Ausführen einer thermischen Diagnose nach einem der vorstehenden Ansprüche, **dadurch gekennzeichnet, dass** die Parameter, die das Wetter betreffen, ausgewählt sind aus der Gruppe, die die Außentemperatur, die Windgeschwindigkeit, die Windrichtung, die Sonneneinstrahlung umfasst.

6. Verfahren zum Ausführen einer thermischen Diagnose nach einem der vorstehenden Ansprüche, **dadurch gekennzeichnet, dass** Wetterparameter mithilfe von Sensoren erhalten werden, die sich außerhalb des Gebäudes oder des Gebäudeteils befinden.

7. Verfahren zum Ausführen einer thermischen Diagnose nach einem der vorstehenden Ansprüche, **dadurch gekennzeichnet, dass** Wetterparameter auf Grundlage von Daten einer Internetseite erhalten werden.

8. Verfahren zum Ausführen einer thermischen Diagnose nach einem der vorstehenden Ansprüche, **dadurch gekennzeichnet, dass** es ebenfalls eine Messung vorsieht, die es ermöglicht, eine Anwesenheit von Personen im Gebäude oder im betreffenden Gebäudeteil zu bestimmen und/oder zu quantifizieren.

9. Verfahren zum Ausführen einer thermischen Diagnose nach einem der vorstehenden Ansprüche, **dadurch gekennzeichnet, dass** es ebenfalls mindestens eine Temperaturmessung im Inneren des Gebäudes oder des Gebäudeteils vorsieht, wobei die Messung an einem Ort ausgeführt wird, der aufgrund des Energieverbrauchs wärmer sein könnte als der Rest des Gebäudes oder des Gebäudeteils.

10. Verfahren zum Ausführen einer thermischen Diagnose nach einem der vorstehenden Ansprüche, **dadurch gekennzeichnet, dass** es ebenfalls vorsieht, in die Erstellung des digitalen Modells jede Information einzubeziehen, die einen Einfluss auf den Energieverbrauch hat, wie zum Beispiel die Parameter, die ein Lüftungssystem betreffen.

11. Verfahren zum Ausführen einer thermischen Diagnose nach einem der vorstehenden Ansprüche, **dadurch gekennzeichnet, dass** die thermischen und/oder energetischen Eigenschaften, die aus dem digitalen Modell abgeleitet werden, ausgewählt sind aus der Gruppe der Eigenschaften, die einen Transmissionswärmeverlust-Koeffizienten

($H_T$), Transmissionsenergieverluste ($Q_T$, $Q_T^n$ oder $P_T$), Infiltrationsverluste ($Q_V$, $Q_V^n$ oder $P_V$), sonnenbedingten

Wärmeeintrag ($\eta Q_s$, $\eta Q_S^n$ oder $\eta P_s$) und Schwankungen von $Q_T$, $Q_V$, $Q_s$ in Bezug auf die Wetterbedingungen

enthält:

$$\delta Q_T = Q_T - Q_T^n$$

$$\delta Q_V = Q_V - Q_V^n$$

$$\delta Q_S = Q_S - Q_S^n.$$

12. Verfahren zum Ausführen einer thermischen Diagnose nach einem der vorstehenden Ansprüche, **dadurch gekennzeichnet, dass** es einen Schritt des Berechnens eines Heiz-/Kühlverbrauchs mit dem erstellten digitalen Modell und den das Wetter betreffenden Parametern, sowie einen Schritt des Ausgebens eines Alarms umfasst, wenn der gemessene Heiz-/Kühlverbrauch wesentlich höher ist als ein berechneter Heiz-/Kühlverbrauch.

13. Verfahren zum Ausführen einer thermischen Diagnose nach einem der vorstehenden Ansprüche, **dadurch gekennzeichnet, dass** es einen Schritt des Berechnens von thermischen und/oder energetischen Eigenschaften mit dem erstellten digitalen Modell und den das Wetter betreffenden Parametern, sowie einen Schritt des Ausgebens eines Alarms umfasst, wenn sich die berechneten Eigenschaften unter eine vorbestimmte Schwelle verschlechtern.

14. Diagnosevorrichtung, **dadurch gekennzeichnet, dass** sie Mittel für das Umsetzen jedes der Schritte eines Verfahrens nach einem der Ansprüche 1 bis 13 umfasst.

**Claims**

1. Method for carrying out a thermal diagnosis of a building or a part of a building, occupied or not, comprising heating/cooling appliances for the heating/cooling of the building or a part of the building, as well as use appliances situated inside the building or a part of the building, said method having the following steps:

- acquisition of parameters relating to meteorology,
- measuring energy consumption of the heating/cooling appliances and the use appliances,

wherein:

- a digital model is created from input parameters taken from at least some of the measurements and acquisitions made, said digital model being a recursive model linking a heating/cooling energy demand to a predetermined number of said input parameters, and
- a thermal diagnosis is carried out by supplying said digital model with meteorological data chosen so as to derive from said digital model thermal and/or energy characteristics of the building or of a part of the building.

2. Method for carrying out a thermal diagnosis according to claim 1, **characterised in that** a calibration temperature is determined, the calibration temperature which, for given meteorological and use parameters of the building or of a part of the building, corresponds to a zero heating/cooling energy consumption, making it possible to estimate the internal temperature and to carry out the thermal diagnosis of the building or of a part of a building.

3.  Method for carrying out a thermal diagnosis according any one of the preceding claims, **characterised in that** a separate measurement of the energy consumption of the use appliances and of the energy consumption of the heating/cooling appliances are carried out.

4.  Method for carrying out a thermal diagnosis according to any one of the preceding claims, **characterised in that** said method further comprises a step of determining the efficiency of the heating/cooling appliances from a separate measurement of the energy consumption between the use appliances with a thermal efficiency of 1 and the heating/cooling appliances with a thermal efficiency different from 1.

5.  Method for carrying out a thermal diagnosis according to any one of the preceding claims, **characterised in that** the parameters relating to meteorology are chosen from the set comprising external temperature, wind speed, wind direction and sunshine.

6.  Method for carrying out a thermal diagnosis according to any one of the preceding claims, **characterised in that** meteorological parameters are obtained by means of sensors external to the building or part of the building.

7.  Method for carrying out a thermal diagnosis according to any one of the preceding claims, **characterised in that** meteorological parameters are obtained from data on an internet site.

8.  Method for carrying out a thermal diagnosis according to any one of the preceding claims, **characterised in that** it also provides for a measurement making it possible to determine and/or quantify a human presence in the building or in part of the building concerned.

9.  Method for carrying out a thermal diagnosis according to any one of the preceding claims, **characterised in that** it also provides for at least one temperature measurement inside the building or the part of the building, said measurement being carried out in a place liable to be warmer than the rest of the building or part of the building, because of the use consumption.

10.  Method for carrying out a thermal diagnosis according to any one of the preceding claims, **characterised in that** it also makes provision for integrating, in the creation of the digital model, any information having an influence on the energy consumption, such as for example the parameters relating to a ventilation system.

11.  Method for carrying out a thermal diagnosis according to any one of the preceding claims, **characterised in that** the thermal and/or energy characteristics derived from the digital model are chosen from all the characteristics containing a transmission loss coefficient ($H_T$), transmission energy losses ($Q_T$, $Q_T^n$ ou $P_T$), infiltration losses ($Q_V$, $Q_V^n$ ou $P_V$), solar gains ($\eta Q_S$, $\eta Q_S^n$ ou $\eta P_S$) and fluctuations of $Q_T$, $Q_V$, $Q_S$ with respect to the meteorological conditions:

$$\delta Q_T = Q_T - Q_T^n$$

$$\delta Q_V = Q_V - Q_V^n$$

$$\delta Q_S = Q_S - Q_S^n$$

12.  Method for carrying out a thermal diagnosis according to any one of the preceding claims, **characterised in that** it comprises a step of calculating a heating/cooling consumption with the digital model created and the parameters relating to meteorology as well as a step of sending an alert when the heating/cooling consumption measured is substantially greater than a calculated heating/cooling consumption.

13.  Method for carrying out a thermal diagnosis according to any one of the preceding claims, **characterised in that** it comprises a step of calculating thermal and/or energy characteristics with the digital model created and the parameters relating to meteorology as well as a step of sending an alert when the calculated characteristics degrade below a predetermined threshold.

14. Diagnostic device, **characterised in that** it comprises means for implementing each of the steps of a method according to any one of claims 1 to 13.

Fig. 1

Fig. 2

E

T-cal

0

T-ext

Fig. 3

T-int                    T-ext

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2967793
- EP 2312505 A
- FR 2959040
- EP 2226738 A
- EP 2081097 A
- EP 2400440 A

**Littérature non-brevet citée dans la description**

- Modeling and simulation of building energy performance for portfolios of public buildings. **LEE, Y.M. et al.** Proceedings of the 2011 Winter Simulation Conference. IEEE
- Estimation of thermal parameters of buildings through inverse modeling and clustering for a portfolio of buildings. **AN, L. et al.** Working paper. IBM TJ Watson Research Center, 2012
- **LIU, F. et al.** Statistical modeling for anomaly detection, forecasting and root cause analysis of energy consumption for a portfolio of buildings. *Proceedings of IBPSA,* 2011
- Handbook: Fundamentals. 2009